# EUROPÄISCHE PATENTSCHRIFT

(11) **EP 3 173 452 B1**
(45) Veröffentlichungstag und Bekanntmachung des Hinweises auf die Patenterteilung: **23.05.2018**
(21) Anmeldenummer: 16194016.8
(22) Anmeldetag: 14.10.2016
(51) Int. Cl.: C09J 7/02, C09J 7/04, B65H 19/10

(54) **KLEBEBAND UND SEINE VERWENDUNG**
ADHESIVE STRIP AND ITS USE
BANDE ADHÉSIVE ET SON UTILISATION

(30) Priorität: 12.11.2015 DE 102015222282
(43) Veröffentlichungstag der Anmeldung: 31.05.2017
(73) Patentinhaber: tesa SE, 22848 Norderstedt (DE)
(72) Erfinder: von Wedel-Parlow, Tobias, 22527 Hamburg (DE); Czerwonatis, Niels, 22393 Hamburg (DE); Schwarzbach, Julia, 22529 Hamburg (DE); Götz, Kerstin, 22547 Hamburg (DE)

(56) Entgegenhaltungen:
- WO-A1-03/006567
- WO-A1-2007/096010
- WO-A1-2015/149889

## Beschreibung

Die Erfindung betrifft ein Klebeband für den fliegenden Rollenwechsel von auf Rollen aufgewickeltem unpolaren Flachbahnmaterial gemäß den Merkmalen des Oberbegriffs des Hauptanspruchs sowie ein Verfahren für den fliegenden Rollenwechsel von auf Rollen aufgewickeltem unpolaren Flachbahnmaterial.

Bei der Verarbeitung von Flachbahnmaterial (Papier, Folien, Vliese oder dergleichen) ist der fliegende Rollenwechsel ein gängiges Verfahren, um eine alte, fast abgespulte Rolle durch eine neue Rolle zu ersetzen, ohne die schnell laufenden Maschinen dafür anhalten zu müssen. Bei derartigen fliegenden Rollenwechseln kommen häufig Selbstklebebänder (auch als Haftklebebänder bezeichnet) zum Einsatz, um das Ende der alten Bahn mit dem Anfang der neuen Bahn zu verbinden.

Die Durchführung eines fliegenden Rollenwechsels (auch "dynamischer Rollenwechsel" genannt) erfolgt in der folien- und vliesverarbeitenden Industrie bei Materialien mit unpolaren Oberflächen nach zwei unterschiedlichen Verfahren.

Bei dem ersten Verfahren werden doppelseitig klebende Selbstklebebänder in Handarbeit am Bahnanfang der Bahn der neuen Rolle in einer vorteilhaften Anordnung verklebt (üblicherweise w- oder v-förmig) und das an dem Klebeband überstehende Bahnmaterial abgetrennt. Zusätzlich wird der Anfang der Bahn der neuen Rolle mit sogenannten Festhalteetiketten (oder "Fixen") an der darunter liegenden Wicklung der neuen Rolle fixiert, um zu verhindern, dass die Bahn abgewickelt wird, wenn die neue Rolle auf die Oberflächengeschwindigkeit der alten Rolle beschleunigt. Nachteilig an diesem Verfahren ist, dass die Vorbereitung der Rollen sehr zeitaufwändig ist und das Verkleben den Einsatz von Fachkräften erfordert. Zudem führt das Verfahren nicht immer zu den gewünschten Ergebnissen, da die so erzielten Verklebungen durch die Schichtung von Bahnmaterial, Festhalteetiketten und Klebestreifen relativ dick sind. Ferner kann es gerade bei dünnen, flexiblen Bahnmaterialien dazu kommen, dass am Anfang einer neuen Bahn infolge des bei der Rotation auftretenden gegengerichteten Luftstroms Ausstülpungen im Bahnmaterial auftreten, was im allgemeinen zu einer schlechten Verklebung der Bahnen führen kann.

Bei dem zweiten bekannten Verfahren wird ein einseitig klebendes Selbstklebeband überlappend und in gerader Linie unter das freie Ende der obersten Bahn der neuen Rolle verklebt, so dass die klebende Seite nach außen zeigt und nur zum Teil von der neuen Bahn abgedeckt ist. Der freiliegende Teil der nach außen zeigenden klebenden Seite wird mit der Bahn der alten Rolle verklebt. Um bei diesem Verfahren ein Abwickeln der Bahn beim Beschleunigen der neuen Rolle auf die Oberflächengeschwindigkeit der alten Rolle zu verhindern, wird zwischen der obersten Wicklung der neuen Rolle und der darunter liegenden Wicklung eine Flüssigkeit eingebracht, so dass die obere Wicklung an der darunter liegenden Wicklung durch die Kapillarkräfte fixiert wird. Nachteilig hierbei ist, dass auch dieses Verfahren den Einsatz von Fachpersonal erfordert und dennoch nicht immer zu technisch vorteilhaften Ergebnissen führt, da die Effizienz einer Fixierung des Bahnmaterials durch eine Flüssigkeit von vielen Parametern abhängt, beispielsweise der Oberflächenenergie, Flexibilität und dem Flächengewicht des Folienmaterials, von der eingesetzten Flüssigkeitsmenge, deren Polarität, Viskosität, Dichte, sowie der Schichtdicke, Fläche und dem Scherverhalten des Flüssigkeitsfilms. Ein entscheidender Nachteil dieses Verfahrens besteht zudem darin, dass die Bahngeschwindigkeit beim Rollenwechsel nicht zu hoch sein darf und es außerdem zu einer Verunreinigung der Anlage und des Bahnmaterials infolge der verwendeten Flüssigkeit kommt.

Obiges Verfahren kommt auch in der papierverarbeitenden Industrie zum Einsatz. Dort stellt eine Weiterentwicklung des ersten Verfahrens das Splice-Verfahren (Splicing-Verfahren; Spleißverfahren) dar, bei dem das zur Fixierung dienende Fix in das die Papierbahnen verbindende Selbstklebeband integriert ausgebildet ist. Nach Verbinden der Bahnen spaltet hierbei der als Fix dienende spaltfähige Träger auf, so dass ein Teil des spaltfähigen Trägers auf dem die Bahnen verbindenden Selbstklebeband verbleibt (d. h. an der oberen Wicklung), während der andere Teil an der darunter liegenden Wicklung verbleibt. Als "spaltfähig" werden solche Träger bezeichnet, die parallel zu ihrer Flächenausdehnung spaltbar sind, und insbesondere solche Träger, die bezogen auf die Anforderungen in einem Splice-Verfahren auch tatsächlich spalten.

Zur Durchführung dieses Verfahrens sind in der papierverarbeitenden Industrie etliche Produkte bekannt. So offenbart etwa DE 196 32 689 A2 ein Klebeband, das zusätzlich zu dem Hauptträger mit einem spaltfähigen Papierträger ausgerüstet ist. Bei den dynamischen Belastungen beim Verbinden der Bahnen beider Rollen spaltet der Papierträger auf und deckt mit seinen Resten die zur Fixierung verwendete Klebemasse in einem Bereich nichtklebend ab, der bei anderen Klebebändern ansonsten offen liegen bleibt. DE 199 02 179 A1 offenbart ebenfalls ein derartiges Klebeband, bei dem der spaltfähige Papierträger gegenüber dem Hauptträger versetzt angeordnet ist, um unter Belastung das Auftreten von Reißern zu verhindern.

Zur Verbesserung des fliegenden Rollenwechsels in der folien- und vliesverarbeitenden Industrie wäre es wünschenswert, Klebebänder einsetzen zu können, die ähnlich strukturiert sind wie solche, die bereits aus der papierverarbeitenden Industrie bekannt sind. Insbesondere wird dies angestrebt für Folien- und Vliesmaterialien mit unpolaren Oberflächen. Derartige unpolare Oberflächen treten bei Materialien mit einer geringen Oberflächenenergie auf, beispielsweise bei Polyethylen, bei Polypropylen oder bei Polyethylenterephthalat (PET).
Für derartige unpolare Oberflächen werden Selbstklebemassen benötigt, die in besonderem Maße hochklebrig und gleichzeitig hochtackig sind. Die hierfür erforderliche hohe Klebkraft und hohe Anfassklebrigkeit (der sogenannte "Tack") lässt sich üblicherweise dadurch erhalten, dass die Fließfähigkeit der Klebemasse erhöht wird.
Auch in der papierherstellenden und -verarbeitenden Industrie ist festzustellen, dass die Papiere wegen der zugesetzten Additive und/oder Oberflächenbehandlungen, wie bestimmte Leime, Stärkestrich und dergleichen, zunehmend unpolarer werden. Dies führt dazu, dass es auch hier zunehmend wichtiger wird, die Klebemassen entsprechend anzupassen.

Herkömmliche hochklebrige und hochtackige Klebemassen sind jedoch für den fliegenden Rollenwechsel bei unpolaren Materialien, wie Folien, Vliese und bestimmte Papiere, bei einem Splice-Verfahren schlecht bzw. gar nicht geeignet. Die Erhöhung der Klebkraft und der Anfassklebrigkeit einer Klebemasse geht mit der Erhöhung ihrer Fließfähigkeit einher. Infolge der hohen Fließfähigkeit wird eine derartige Klebemasse aus dem klebend ausgerüsteten spaltfähigen System seitlich ausgedrückt und kann sogar in den spaltfähigen Träger eindringen, was insgesamt zu einem Verblocken des spaltfähigen Systems und zu einem Versagen der Splice-Verbindung führen kann. Des Weiteren ist nachteilig, dass die fließfähigen Klebemassen während des Splice-Vorgangs aus der Klebfuge heraus gelangen und somit nach der Ausführung des Spaltens des spaltfähigen Trägers Klebemassereste unabgedeckt im System verbleiben können.

Eine Verbesserung der Splice-Klebebänder für Folienmaterialien stellen solche Klebebänder dar, wie sie die DE 10 2006 008 561 A zeigt. Dort werden als Klebmassen für die obere Klebemassenschicht, also diejenige Schicht, die im Spliceprozess an die ablaufende Folienbahn anhaftet, unter anderem Klebmassen auf Synthesekautschukbasis auf Styrol-Isopren-Styrol-Blockcopolymer-Basis eingesetzt. Geeignete Synthesekautschukmassen haften an Untergründe mit unpolaren Oberflächen besser an als Klebemassen auf Acrylatbasis. Bei höheren Temperaturen - wie etwa Temperaturen über 100 °C - schmelzen die Styrol-Domänen der Blockcopolymere jedoch auf, so dass solche Klebemassen bei höheren Temperaturen nicht eingesetzt werden können.

Die Aufgabe der Erfindung war demzufolge, ein Klebeband mit zumindest einer oberen Klebemasse, insbesondere Selbstklebemasse, einem spaltfähigen Träger und einer unteren Selbstklebemasse an der unteren Seite des spaltfähigen Trägers zur Verfügung zu stellen, das auch bei erhöhten Temperaturen für den fliegenden Rollenwechsel bei hohen Bahngeschwindigkeiten von auf Rollen aufgewickeltem unpolaren Flachbahnmaterial besonders geeignet ist.

Die Aufgabe konnte hervorragend durch ein Klebeband für den fliegenden Rollenwechsel von Flachbahnmaterialien, insbesondere Flachbahnmaterialien mit unpolaren Oberflächen, gelöst werden, das zumindest eine obere Klebemassenschicht, insbesondere Selbstklebemassenschicht, einen als flächige Sollbruchstelle - im Folgenden auch als Sollbruchfläche bezeichnet - angepassten inneren Klebebandbereich und eine untere Klebemassenschicht, insbesondere Selbstklebemasse, an der unteren Seite des inneren Klebebandbereichs umfasst, wobei als Klebemasse (insbesondere als Selbstklebemasse) für zumindest die obere Klebemassenschicht (insbesondere Selbstklebemassenschicht), also diejenige Klebemassenschicht (insbesondere Selbstklebemassenschicht), die im Spliceprozess an die ablaufende Folienbahn anhaftet, eine Naturkautschukklebemasse eingesetzt wird, dadurch gekennzeichnet, dass die Naturkautschukmasse die folgenden Komponenten umfasst: a) 40 bis 60 Gew.-% Naturkautschuk b) 10 bis 50 Gew.-% eines oder mehrerer Festharze c) 8 bis 20 Gew.-% Weichmacher d) optional bis zu 10 Gew.-% zusätzlicher Bestandteile und das Verhältnis an Naturkautschuken - Komponente (a) - zur Summe aus Festharzen - Komponente (b) - und Weichmachern - Komponente (c) - mindestens 0,75 und höchstens 1,60 beträgt, bezogen auf die jeweiligen Gewichtsanteile in der Selbstklebemasse. Unpolare Oberflächen treten bei Materialien mit einer geringen Oberflächenenergie auf, wie zum Beispiel bei Polyethylen (PE), bei Polypropylen (PP) oder bei Polyethylenterephthalat (PET) Eine Oberflächenenergie gilt dann als gering, wenn sie 50 mN/m oder weniger, insbesondere weniger als 40 mN/m beträgt. Sofern im Rahmen dieser Schrift von Materialien mit unpolaren Oberflächen die Rede ist, sind dies solche mit entsprechend geringen Oberflächenenergien von 50 mN/m oder weniger, insbesondere weniger als 40 mN/m, noch weiter bevorzugt von 35 mN/m oder weniger. Die Angaben zu Oberflächenenergien in dieser Schrift beziehen sich auf die Bestimmung nach der im Abschnitt "Allgemeine Bestimmungsmethoden" angegebenen Methode.

Naturkautschuk ist - wie der Name schon andeutet - ein aus Naturprodukten erhältliches, elastisches Polymer (cis-1,4-Polyisopren), das auf Pflanzenprodukte wie vor allem Milchsaft (Latex) zurückgeht.
Naturkautschuk kann als ein wesentlicher Rohstoff zu Klebemassen verarbeitet werden, den so genannten Naturkautschukklebemassen. Grundsätzlich können aus allen erhältlichen Qualitäten wie zum Beispiel Crepe-, Ribbed-smoked-sheets (RSS)-, Air-driedsheets (ADS)-, Technically-specified-rubber (TSR)- oder constant-viscosity (CV)-Typen, je nach benötigtem Reinheits- und Viskositätsniveau Selbstklebemassen hergestellt werden. Zur Einstellung der geforderten Eigenschaften von gutem Tack und guter Wärmebeständigkeit ist es von Vorteil, dass der Naturkautschuk während der Verarbeitung ein geringes Maß an Mastikation erfährt bzw. wenn, dass höhermolekulare Typen gegenüber den niedrigmolekularen Typen bevorzugt eingesetzt werden.

Selbstklebemassen, synonym auch als Haftklebemassen bezeichnet, englisch: "pressure sensitive adhesives", PSA, sind insbesondere solche polymeren Massen, die bei der Anwendungstemperatur (sofern nicht anders definiert, bei Raumtemperatur) dauerhaft klebrig und permanent klebfähig sind und an einer Vielzahl von Oberflächen - je nach Natur der Selbstklebemasse und des jeweiligen Untergrundes - bei Kontakt anhaften, insbesondere sofort anhaften (einen sogenannten "Tack" [Klebrigkeit oder Anfassklebrigkeit] aufweisen). Sie sind in der Lage, bereits bei der Anwendungstemperatur ohne eine Aktivierung durch Lösemittel oder durch Wärme - gegebenenfalls durch den Einfluss eines mehr oder weniger hohen Druckes - ein zu verklebenden Substrat hinreichend zu benetzen, damit sich zwischen der Masse und dem Substrat für die Haftung hinreichende Wechselwirkungen ausbilden können.

Zur Einstellung anwendungsgerechter Eigenschaften können Selbstklebemassen durch Zumischen von Klebharzen, Weichmacher, Vernetzern oder Füllstoffen modifiziert werden.

Erfindungsgemäß wird als Selbstklebemasse zumindest für die obere Selbstklebemassenschicht, vorteilhaft sowohl für die obere als auch für die untere Selbstklebemassenschicht, besonders bevorzugt eine Naturkautschukmasse eingesetzt, die die folgenden Komponenten umfasst:
a) 40 bis 60 Gew.-% Naturkautschuk
b) 10 bis 50, bevorzugt 20 bis 50, mehr bevorzugt 30 bis 50 Gew.-% eines oder mehrerer Harze, insbesondere Klebharze, mit Erweichungspunkten (entsprechend DIN EN 1427:2007) von mindestens 60 °C ("Festharze")
c) 8 bis 40, bevorzugt 8 bis 20, mehr bevorzugt 8 bis 15 Gew.-% Weichmacher
d) optional bis zu 10 Gew.-%, bevorzugt bis zu 3 Gew.-%, zusätzlicher Bestandteile.

Unter "zusätzliche Bestandteile" im Sinne der vorliegenden Schrift werden alle weiteren Komponenten unterschieden, die nicht unter die Definition der Naturkautschuke im Sinne der Komponente (a), der Festharze im Sinne der Komponente (b) und der Weichmacher im Sinne der Komponente (c) fallen. Dies können grundsätzlich ohne besondere Beschränkung alle denkbaren Stoffe oder Substanzen sein; beispielweise andere polymere Stoffe als Naturkautschuke, Additive, Füllstoffe und dergleichen. Auf besondere Co-Komponenten im Sinne der Komponente (d) wird im Weiteren noch eingegangen werden.

Vorteilhaft addieren sich die Komponenten a), b), c) und, sofern vorhanden, d) zu 100 %. Üblicherweise liegt die Klebemasse bei Anwendung in getrocknetem Zustand vor (die Trocknung erfolgt zum Beispiel bei 120 °C für 10 Minuten)), also Lösemittel aus dem Herstellverfahren werden weitgehend abgezogen. Sofern in der Klebemasse noch Restlösemittel (üblicherweise im kleinen Prozent- oder ppm-Bereich) vorhanden sind, werden sie der Weichmacherkomponente zugerechnet.
Bevorzugt weist die Klebemasse nur sehr geringe Restlösemittelgehalte unter einem Prozent, weiter bevorzugt von weniger als 0,5 %, ganz besonders bevorzugt von < 0,2 % auf.

Die erfindungsgemäßen Selbstklebemassen auf der Basis von Naturkautschuk zeichnen sich durch einen hohen Tack und gute Klebkräfte auf unpolaren Oberflächen, insbesondere Folienmaterialien, wie zum Beispiel auf Polyethylen, aus. Sie weisen außerdem eine gute Hitzebeständigkeit auf.
Als Tack wird die sogenannte Anfassklebrigkeit einer Klebmasse bezeichnet, also deren Eigenschaft, eine sofortige Haftung auf einem jeweiligen Werkstoff zu bewirken.

Der Begriff "Harz" im Sinne der vorliegenden Schrift ist eine Sammelbezeichnung für bei Raumtemperatur feste, hochviskose oder niedrigviskose (flüssige) organische Produkte mit mehr oder weniger breiter Verteilung der relativen Molmasse. Harze können natürlichen Ursprungs (Naturharze) oder künstlich hergestellt (Kunstharze) sein. Sie weisen meist eine amorphe Struktur, recht niedrige Molmassen und verhältnismäßig hohe Glasübergangstemperaturen auf. Als Harze werden im Rahmen dieser Schrift insbesondere solche oligo- und (niedrig)polymeren Verbindungen angesehen, deren zahlenmittleres Molekulargewicht Mₙ nicht mehr als 5.000, bevorzugt nicht mehr als 4000 und ganz besonders nicht mehr als 3000 g/mol beträgt. Alle Angaben zu Molekulargewichten in dieser Schrift beziehen sich auf die Bestimmung nach der im Abschnitt "Allgemeine Bestimmungsmethoden" angegebenen Methode.

Unter der Bezeichnung "Klebharz", englisch "Tackifier Resins", auch als klebrigmachende Harze bezeichnet, versteht der Fachmann einen Stoff auf Harzbasis, der die Klebrigkeit erhöht.

Harze entsprechend der Komponente (b) haben Erweichungspunkte von mehr als 60 °C, bevorzugt von 80 °C oder mehr und insbesondere von bis zu maximal 150 °C. Bei Raumtemperatur sind solche Klebharze daher in der Regel nicht oder wenig fließfähig (hochviskos bzw. fest). Sie werden daher im Rahmen dieser Schrift zur ausschließlich sprachlichen Unterscheidung von den nachfolgend noch näher beschriebenen "Weichharzen" als "Festharze" bezeichnet, ohne sich durch die Präfixe "Fest" und "Weich" in den Eigenschaften der Harze weiter als in Bezug auf den Erweichungspunkt beschränken zu wollen.

Alle Angaben zum Erweichungspunkt in dieser Schrift, zum Beispiel von oligomeren und polymeren Verbindungen - wie insbesondere der Harze - und zum Beispiel der Weichmacher, beziehen sich auf die Bestimmung entsprechend DIN EN 1427:2007, siehe experimenteller Teil.

Erfindungsgemäß geeignete Festharze sind beispielsweise natürliche und/oder synthetische Harze, wie Pinen- und Indenharze, Kolophonium und Kolophoniumderivate (Kolophoniumester, auch durch z. B. Disproportionierung oder Hydrierung stabilisierte Kolophoniumderivate), Polyterpenharze, Terpenphenolharze, Alkylphenolharze, aliphatische, aromatische und aliphatisch-aromatische Kohlenwasserstoffharze, jeweils gewählt unter Berücksichtigung des entsprechenden Erweichungspunktes, um nur einige zu nennen.
Vorzugsweise handelt es sich bei den Festharzen um Terpenphenolharze und/oder Kolophoniumharze, ganz besonders bevorzugt um Polyterpenharze auf Basis von α-Pinen und/oder ß-Pinen und/oder 8-Limonen.
Beliebige Kombinationen dieser und weiterer Festharze können im Sinne der Komponente (b) eingesetzt werden, um die Eigenschaften der resultierenden Klebmasse wunschgemäß einzustellen. Im Allgemeinen lassen sich alle mit dem Naturkautschuk kompatiblen (löslichen) Harze, die die erfindungsgemäßen Bedingungen für Festharze erfüllen, einsetzen. Auf die Darstellung des Wissensstandes im "Handbook of Pressure Sensitive Adhesive Technology" von Donatas Satas (van Nostrand, 1989) sei ausdrücklich hingewiesen.

Die erfindungsgemäße Klebemasse enthält neben der Naturkautschukkomponente (a) und der Festharzkomponente (b) noch Weichmacher (Komponente (c)). Weichmacher im Sinne der vorliegenden Schrift sind solche chemischen Substanzen, die einen Erweichungspunkt von nicht mehr als 60 °C aufweisen. Hierdurch bieten sie den Vorteil, dass sie als Plastifizierungsmittel eingesetzt werden können. Weichmacher sind in der Regel nicht flüchtig und werden insbesondere im Trocknungsprozess nicht entfernt. Erfindungsgemäß wird zumindest ein Weichmacher eingesetzt, es können aber auch mehrere Weichmacher eingesetzt werden, bevorzugt - aber nicht zwingend - gewählt aus den nachfolgend genannten Verbindungen.

Weichmacher sind zum Beispiel niedermolekulare Polyacrylate, Phosphate oder Polyphosphate, paraffinische und naphthenische Öle, Oligomere wie Oligobutadienen, - isoprenen, flüssige Nitrilkautschuke, flüssige Terpenharze, pflanzliche und tierische Ölen und Fette.

Zu den Weichmachern im Sinne der vorliegenden Schrift gehören auch die Weichharze. Als Weichharze werden im Rahmen dieser Schrift solche Verbindungen bezeichnet, die die gleiche chemische Basis wie die oben aufgeführten Festharze aufweisen, sich aber von diesen durch ihren Erweichungspunkt unterscheiden, der für Weichharze bei nicht mehr als 40 °C, bevorzugt bei nicht mehr als 30 °C liegt. Weichharze können zum Beispiel hervorragend aus den bei den Klebharzen beschriebenen Verbindungsklassen - unter Beachtung gemäß den Vorgaben zur anderen Erweichungstemperatur - ausgewählt werden. Als Komponente (c) kann beispielweise ein einzelnes Weichharz, eine Kombination zweier oder mehrerer Weichharze oder eine Kombination eines Weichharzes mit einem oder mehreren anderen Weichmachern eingesetzt werden, wobei die Weichmacher bevorzugt gewählt sind aus der oben stehenden Auflistung.
Aufgrund ihrer niedrigen Erweichungstemperaturen liegt eine Vielzahl der Weichharze bei Raumtemperatur in flüssiger Form vor, so dass man dann auch von Flüssigharzen spricht. Es hat sich als vorteilhaft herausgestellt, wenn als Weichharze solche Harze ausgewählt werden, die bei Raumtemperatur flüssig sind.

In bevorzugter Vorgehensweise werden als Weichmacher ausschließlich solche Verbindungen eingesetzt, die einen Erweichungspunkt von nicht mehr als 40 °C, besonders bevorzugt von nicht mehr 30 °C aufweisen, wobei diese vorteilhaft, aber nicht zwingend, aus den in den beiden vorstehenden Absätzen genannten Verbindungen (niedermolekulare Polyacrylate, Phosphate oder Polyphosphate, paraffinische und naphthenische Öle, Oligomere wie Oligobutadienen, -isoprenen, flüssige Nitrilkautschuke, flüssige Terpenharze, pflanzliche und tierische Ölen und Fette, Weichharze) gewählt werden.

In weiter vorteilhafter Vorgehensweise werden die eingesetzten Festharze der Komponente (b) und die eingesetzten Weichmacher (Komponente (c)) derart ausgewählt, dass sich die Erweichungstemperaturen der eingesetzten Harze der Komponente (b) und diejenigen der eingesetzten Weichmacher um mindestens 20 °C, bevorzugt um mindestens 40 °C unterscheiden.

Es ist vorteilhaft, wenn in der Selbstklebemasse das Verhältnis an der Menge an Naturkautschuken, also der Komponente (a), zur Summe aus den Mengen der eingesetzten Festharze und Weichmacher, also der Komponenten (b) und (c), im Bereich von 0,75 bis 1,60 liegt, wobei sich der Begriff "Menge" hierbei bezogen auf die jeweiligen Gewichtsanteile bezieht (mit anderen Worten sollte der Gewichtsanteil des Naturkautschuks, geteilt durch den Gesamtgewichtsanteil aus Festharzen und Weichmachern, den Wert 0,75 bis 1,60 ergeben).
In einer Ausführungsvariante der Erfindung ist die Klebmasse frei von weiteren Komponenten [außer den Komponenten (a), (b) und (c)], um den guten Tack der Basisabmischung zu erhalten.
Es hat sich aber als günstig herausgestellt, wenn als Komponente (d) zumindest Antioxidantien (Alterungsschutzmittel, Stabilisierungsmittel) zugesetzt sind. Zur Stabilisierung der Selbstklebemasse werden üblicherweise primäre Antioxidantien wie zum Beispiel sterisch gehinderte Phenole, sekundäre Antioxidantien wie zum Beispiel Phosphite oder Thioether und/oder C-Radikalfänger zugesetzt.
In einer weiteren Ausführungsvariante der Erfindung sind außer den Komponenten (a), (b) und (c) als Komponente (d) ("zusätzliche Bestandteile") ausschließlich Antioxidantien zugemischt.

Es ist auch möglich, dass die Selbstklebemasse stattdessen oder zusätzlich andere Komponenten (d) umfasst. Insbesondere für die Erzielung bestimmter Eigenschaften der Klebmasse können beispielweise Füllstoffe (Additive) zugesetzt sein, und/oder es können weitere Substanzen (außer Füllstoffen oder Additiven) zugesetzt oder vorhanden (zum Beispiel Fremdstoffe resultierend aus der Herstellung) sein.

Sofern außer den Komponenten Naturkautschuk (Komponente (a)), Harzen (Komponente (b)) und Weichmachern (Komponente (c)) weitere Komponenten vorhanden sind, sollte deren Gesamtanteil an der Selbstklebemasse bevorzugt 10 Gew.-%, mehr bevorzugt 3 Gew.-% nicht übersteigen.

Additive (Füllstoffe) werden beispielsweise zur Steigerung der Kohäsion einer Selbstklebemasse eingesetzt. Dabei führt häufig eine Kombination aus Füllstoff/Füllstoff-Wechselwirkungen und Füllstoff/Polymer-Wechselwirkungen zu der gewünschten Verstärkung der Polymermatrix.

Additive werden auch zur Gewichts- beziehungsweise Volumenerhöhung in Papier, Kunststoffe, sowie Kleb- und Anstrichstoffe und andere Produkte beigemischt. Die Additivzugabe verbessert oftmals die technische Verwendbarkeit der Produkte und hat Einfluss auf deren Qualität, zum Beispiel Festigkeit, Härte usw. Die natürlichen, anorganischen und organischen Füllstoffe umfassen beispielsweise und ohne Beschränkung hierauf Fasern, Ruße, Zinkoxid, Titandioxid, Kreide (Calciumcarbonat), Vollglaskugeln, Mikrokugeln aus anderen Materialien, Kieselsäure, Silikate, Kaolin, Talkum, Dolomit und können für die erfindungsgemäße Klebemasse einzeln oder in beliebiger Kombination miteinander eingesetzt werden..
Darüber hinaus kann die Selbstklebmasse organische und/oder anorganische Farbpigmente enthalten, die alternativ zu den vorgenannten Füllstoffen oder auch in Kombination mit einem oder mehreren weiteren Füllstoffen eingesetzt werden können.

Auch bei Kautschuk und synthetischen Elastomeren kann man durch geeignete Additive die Qualität verbessern, so beispielsweise Härte, Festigkeit, Elastizität und Dehnung. Viel gebrauchte Füllstoffe sind Carbonate, insbesondere Calciumcarbonat, aber auch Silicate (Talk, Ton, Glimmer), Kieselerde, Calcium- und Bariumsulfat, Aluminiumhydroxid, Glasfasern und -kugeln sowie Ruße.

Man kann anorganische und organische Additive auch nach ihrer Dichte unterscheiden. So erhöhen die oft in Kunststoffen und auch Klebemassen verwendeten anorganischen Füllstoffe wie Kreide, Titandioxid, Calcium- und Bariumsulfat die Dichte des Composits, da sie selber eine Dichte aufweisen, die höher ist als die des Polymeren. Bei gleicher Schichtdicke ist das Flächengewicht dann höher.
Daneben gibt es Additive, die die Gesamtdichte des Composits reduzieren können. Hierzu zählen Mikrohohlkugel, sehr voluminöse Leichtfüllstoffe. Die Kugeln sind mit Luft, Stickstoff oder Kohlendioxid gefüllt, die Kugelschalen bestehen aus Glas, bei einigen Produkten auch aus einem Thermoplasten. Die Kugeln können vorexpandiert oder als expandierbare Füllstoffe eingearbeitet werden.

Zur Steigerung der Kohäsion und Wärmebeständigkeit der Selbstklebemasse kann diese zusätzlich durch chemische oder physikalische Methoden vernetzt werden.

Zu den physikalischen Methoden zählt beispielsweise die Bestrahlung mit Elektronenstrahlen. Typische Bestrahlungsvorrichtungen, die zum Einsatz kommen können, sind Linearkathodensysteme, Scannersysteme bzw. Segmentkathodensysteme, sofern es sich um Elektronenstrahlbeschleuniger handelt. Eine ausführliche Beschreibung des Standes der Technik und die wichtigsten Verfahrensparameter findet man bei Skelhorne, Electron Beam Processing, in Chemistry and Technology of UV and EB formulation for Coatings, Inks and Paints, Vol. 1, 1991, SITA, London. Die typischen Beschleunigungsspannungen liegen im Bereich zwischen 50 kV und 500 kV, vorzugsweise 80 kV und 300 kV. Die angewandten Streudosen bewegen sich zwischen 5 bis 150 kGy, insbesondere zwischen 20 und 100 kGy.

Die Elektronenstrahlhärtung bewirkt eine Vernetzung der erfindungsgemäßen Selbstklebemasse. Damit wird eine deutliche Verbesserung der Temperaturbeständigkeit der erfindungsgemäßen Selbstklebemasse erreicht.

Zum Zwecke der thermisch induzierten chemischen Vernetzung sind alle vorbekannten thermisch aktivierbaren chemischen Vernetzer wie beschleunigte Schwefel- oder Schwefelspendersysteme, Peroxidvernetzer, Isocyanatsysteme, reaktive Melamin-, Formaldehyd- und (optional halogenierter) Phenol-Formaldehydharze beziehungsweise reaktive Phenolharz- oder Diisocyanatvernetzungssysteme mit den entsprechenden Aktivatoren, epoxidierte Polyester- und Acrylat-Harze sowie deren Kombinationen einsetzbar.

Die Vernetzer werden vorzugsweise aktiviert bei Temperaturen über 50 °C, insbesondere bei Temperaturen von 100 °C bis 160 °C, ganz besonders bevorzugt bei Temperaturen von 110 °C bis 140 °C.

Die vorstehend beschriebenen Naturkautschuk-Klebemassen werden insbesondere bevorzugt zumindest als obere Selbstklebemassen eines Klebebandes für den fliegenden Rollenwechsel eingesetzt. Die obere Selbstklebemasse dient im Splice-Verfahren in vorteilhaften Vorgehensweisen dazu, die Oberseite des erfindungsgemäßen Klebebands mit dem Bahnanfang der neuen Rolle und mit der fast abgespulten Bahn der alten Rolle zu verbinden, wodurch die Bahnen beider Rollen über das Klebeband untereinander verbunden werden. Die untere Selbstklebemasse dient insbesondere dazu, die Unterseite des erfindungsgemäßen Klebebands mit der zweitobersten Wicklung zu verbinden, wodurch die oberste und die zweitoberste Wicklung der neuen Rolle über das Klebeband zunächst untereinander verbunden werden. Im weiteren Verlauf des Splice-Verfahrens wird beim Öffnen der Sollbruchstelle des Klebebandes die Verbindung der oberen beiden Wicklungen der Rolle wieder getrennt, und zwar sehr bevorzugt derart, dass die von der Oberseite der jeweiligen Wicklung abgekehrten klebenden Bereiche der oberen Selbstklebemasse und der unteren Selbstklebemasse von dem nunmehr gespaltenen Träger nichtklebend abgedeckt bleiben.

Als untere Selbstklebemasse lassen sich grundsätzlich alle Klebemassen einsetzen. Für die untere Klebemasse werden bevorzugt solche Klebemassen eingesetzt, deren komplexe Viskosität so eingestellt ist, dass ein kalter Fluss verhindert wird. Hierdurch kann die untere Klebemasse, insbesondere wenn sie an der unteren Seite der die Sollbruchstelle bildenenden Baueinheit - wie etwa einem spaltfähigen Träger - vorgesehen ist, nicht aus der Klebefuge austreten und mit der oberen Seite der die Sollbruchstelle bildenenden Baueinheit verkleben, wodurch ein Verblocken der Sollbruchstelle vermieden wird und das System auch weiterhin spaltfähig bleibt.

In einer besonders bevorzugten Vorgehensweise wird als untere Selbstklebemasse ebenfalls eine Naturkautschukmasse eingesetzt, bevorzugt eine Naturkautschukmasse, wie sie vorstehend näher beschrieben wurde, weiter bevorzugt eine zur oberen Selbstklebemasse identische Klebemasse eingesetzt. Denn auch hierfür ist eine Klebemasse von Vorteil, die auf unpolare Oberflächen abgestimmt ist.

Das erfindungsgemäße Klebeband zeichnet sich durch seine Eignung für den fliegenden Rollenwechsel aus, das heißt es weist zumindest eine obere und eine untere Klebemasse auf und einen dazwischenliegenden inneren Klebebandbereich, der als flächige Sollbruchstelle ausgebildet ist. Eine solche Sollbruchstelle ist derart gestaltet, dass sie während des fliegenden Rollenwechsels derart flächig aufspalten kann, dass die obere Klebemassenschicht und die untere Klebemassenschicht voneinander getrennt werden.

Dabei kann das Klebeband unterschiedlich ausgestaltet sein. In einer ersten Ausführungsvariante besteht das Klebeband aus einer oberen und einer unteren Klebemassenschicht sowie einer zwischen diesen beiden Schichten angeordneten dritten, einlagigen, flächig spaltfähigen Schicht (Spaltschicht). Dies kann insbesondere eine Trägerschicht sein, sehr bevorzugt wird dazu ein spaltfähiges Papier eingesetzt (siehe unten).

In einer weiteren vorteilhaften Ausgestaltung ist die Spaltschicht zweilagig ausgestaltet, wobei zwei Trägerschichten insbesondere derart miteinander verbunden sind, dass sie bei Beanspruchung einer Kraft, die senkrecht auf die Schichtflächen wirkt, leicht wieder voneinander lösbar sind. Die Verbindung kann dabei auf physikalisch-mechanisch Weise realisiert sein, etwa durch Prägung oder dergleichen.
Die Verbindung zweier voneinander delaminierbarer Schichten kann auch durch Einbringung einer chemischen, die Schichten zunächst zusammenhaltenden, Substanz erfolgen.
So können die Trägerschichten etwa mit einer Lösung, Suspension, Dispersion oder dergleichen einer chemischen Substanz "zusammengeklebt" werden, woraufhin die Lösung, Suspension, Dispersion oder dergleichen nachträglich getrocknet wird, so dass sie die Trägerschichten noch zusammenhält, dass sie aber in Form ihrer getrockneten Filme auch bei höheren Temperaturen keinen Tack bzw. keine Haftklebrigkeit besitzen, damit die nach der Trennung des Verbundes freigelegten Flächen keine Maschinenteile oder Produktionsware verschmutzen.
Als chemische Substanz zum Zusammenfügen der Trägerschichten können Kaschierklebemassen, Lacke oder dergleichen eingesetzt werden (siehe unten). Der Auftrag der chemischen Substanz kann dabei vollflächig vorliegen, oder sie ist nur teilflächig aufgetragen, wie etwa in Form von Streifen, Punkten oder dergleichen. Beispiele sind der Auftrag durch Streifenstrich, Siebdruck und so weiter.

In einer nächsten Ausführungsform ist die untere Klebmassenschicht auf eine Trägerschicht aufgetragen, wobei die Trägerschicht so mit einer Funktionsschicht ausgerüstet ist, dass diese Funktionsschicht bei Spaltvorgang von der Trägerschicht voll abspaltet oder in Form einer Teilschicht, wobei die Funktionsschicht in sich flächig spaltet. Dies kann auch dadurch realisiert werden, dass zwei oder mehrere Funktionsschichten vorhanden sind, die sich voneinander trennen können.

Die vorgenannten Ausführungsformen können dadurch modifiziert sein, dass weitere Schichten in dem Klebeband vorhanden sind, insbesondere zwischen der oberen Klebmassenschicht und der Spaltschicht angeordnet. Solche Schichten können beispielsweise Schichten sein, die eine Detektierung des Klebebandes erlauben, wie etwa Metallschichten, und/oder solche Schichten, die eine zusätzliche Stabilität in das Klebeband bringen. Ebenso können weitere - innere - Klebmassenschichten vorgesehen sein, und/oder eingefärbte Schichten (Farbpartikel tragende Schichten, Lackschichten oder dergleichen).

Das Design des erfindungsgemäßen Klebebands kann weiter für seinen Einsatzzweck angepasst werden. Speziell designte Klebebänder für den fliegenden Rollenwechsel zeigen beispielsweise die folgenden Schriften; die in diesen Schriften gezeigten Ausgestaltungen sind auch für die vorliegende Erfindung realisierbar und gelten als vorteilhafte Ausgestaltungen: EP 818 408 A; EP 881 046 A; EP 860 489 A; EP 970 904 A; EP 1 022 245 A; EP 1 104 795 A; EP 1 355 843 A; EP 1 258 441 A; WO 2003 018454 A; WO 2003 018453 A; WO 2003 018451 A; WO 2003 018451 A; WO 2003 024850 A; EP 1 342 684 A; EP 2 048 212 A; EP 2 130 886 A; EP 2 130 887 A; EP 2 130 888 A; EP 2 130 889 A; WO 2011 069821 A; EP 2 571 949 A; EP 1 428 861 A; EP 1 645 533 A; EP 1 604 927A; WO 2007 048695 A; EP 2 113 543 A; EP 1 215 287 A; WO 1995 029115 A.

Beispielweise haben sich Klebebänder als für den fliegenden Rollenwechsel als sehr geeignet herausgestellt und sind im Sinne der vorliegenden Erfindung ebenfalls sehr vorteilhaft, die zumindest einen Hauptträger umfassen, auf dessen Oberseite die obere Selbstklebemassenschicht vorgesehen ist.
Durch Verwendung eines mechanisch stabilen nichtspaltfähigen Materials für den Hauptträger kann beim Splice-Verfahren die Effizienz der Verklebung der Bahn der alten Rolle mit dem Bahnanfang der neuen Rolle stark erhöht werden. Als Hauptträger können insbesondere alle typischen flächenförmigen Trägermaterialien für Klebebänder eingesetzt werden, beispielsweise Papierträger, insbesondere feste Papierträger, etwa solche aus ein- oder zweiseitig gestrichenem glatten Papier, sowie Folienträger, etwa BOPP-Folien, PET-Folien, aluminisierte PET-Folien und Aluminiumfolien. Wünschenswert ist hierbei, dass es sich um einen reißfesten Hauptträger handelt. Die obere Selbstklebemassenschicht kann direkt auf dem Hauptträger vorliegen, oder es können sich auch eine oder mehrere weitere Schichten - wie Detektierungsschichten, Farbschichten, weitere Trägerschichten, weitere Klebemassenschichten und so weiter - zwischen der oberen Klebemassenschicht und der Hauptträgerschicht befinden.
In einer vorteilhaften Vorgehensweise ist auf der Unterseite des Hauptträgers unmittelbar oder über Zwischenschichten ein spaltfähiges System vorgesehen, umfassend zumindest eine Spaltschicht, insbesondere wie sie oben weiter beschrieben ist, sowie eine untere Selbstklebemassenschicht. Das untere spaltfähige System kann insbesondere über eine weitere Klebemassenschicht an der Unterseite des Hauptträgers verankert sein. Das untere spaltfähige System kann aber auch durch die untere Klebmassenschicht und ein- oder mehrere Funktionsschichten, von denen sich zumindest eine Funktionsschicht - oder eine Teilschicht hiervon - vom Hauptträger ablösen kann, gebildet werden.

Das untere spaltfähige System kann weitere Schichten umfassen, etwas weitere Funktionsschichten - wie Detektierungsschichten, Farbschichten -, weitere Trägerschichten, weitere Klebemassenschichten oder dergleichen.
Das untere spaltfähige System kann vollflächig unter dem Hauptträger vorliegen, insbesondere aber auch nur eine Teilfläche der Unterseite des Hautträgers einnehmen.

Auf der Unterseite des Hauptträgers können - unmittelbar oder über weitere, dazwischenliegende Schichten - neben dem spaltfähigen System eines oder mehrere weitere, gleiche oder andersartige spaltfähige Systeme und/oder nicht spaltfähige Klebesysteme vorgesehen sein.

In einer sehr bevorzugten Ausführungsform ist das untere spaltfähige System in Form eines Streifens aufgebracht, der sich in einer vorteilhaften Ausgestaltung des Klebebandes parallel zu einer dessen Kanten, also insbesondere geradlinig erstreckt. In vorteilhafter Weise erstreckt sich ein solcher - insbesondere geradliniger - Klebmassenstreifen in Längsrichtung (ℓ) des Klebebandes, also an einer oder parallel zu einer der Längskanten des Klebebandes.
Klebebänder weisen üblicherweise eine Ausdehnung in einer ersten Richtung (**ℓ**) aus, die sehr viel größer ist als die Ausdehnung in einer hierzu rechtwinklig definierten zweiten Richtung ( 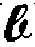 ); diese erste Richtung wird im Rahmen dieser Schrift daher als Längsrichtung (**ℓ**), die Ausdehnung in diese Richtung als Länge (**ℓ**_{K}) des Klebebandes bezeichnet. Die zweite Richtung wird als Querrichtung ( 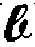 ), die Ausdehnung in dieser zweiten Richtung als Breite ( 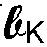 ) des Klebebandes bezeichnet. Durch die Länge (ℓ_{K}) und die Breite ( 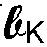 ) des Klebebandes wird dessen flächige Ausdehnung bestimmt.
Die Dicke (***d***_{K}) des Klebebandes - die Ausdehnung in der dritten, zur ersten und zur zweiten Richtung und daher zur Flächenausdehnung des Klebebandes rechtwinklig definierten Richtung (***d***) im kartesischen Koordinatensystem - ist üblicherweise wiederrum sehr viel geringer als die Breite des Klebebandes.
Das erfindungsgemäße Klebeband kann jedoch auch in Form von Klebebandabschnitten ("Etiketten") vorliegen, bei denen die Länge und die Breite des Klebebandes in ähnlicher Größenordnung vorliegen.

In einer bevorzugten Ausführungsform ist das in Form eines Streifens aufgebrachte untere spaltfähige System parallel zu der ihm am nächsten liegenden Längskante des Klebebandes ausgerichtet und in einem Abstand A zu dieser Längskante eingerückt. Die Einrückung beträgt vorteilhaft bis zu 10 mm, bevorzugt 0,5 bis 5 mm, sehr bevorzugt 1 bis 3 mm. Eine spezielle Ausführungsform des erfindungsgemäßen Klebebandes weist eine Einrückung von 2 mm auf.

In einer weiteren sehr bevorzugten Ausführungsvariante ist das untere spaltfähige System in Form eines Streifens vorgesehen, der zwar insgesamt in Längsrichtung (ℓ) des Klebebandes verläuft, aber seinerseits keine geradlinigen Kanten aufweist. Dies kann etwa derart aussehen, dass man sich eine geradlinig verlaufende imaginäre Linie in Längsrichtung des Klebebandes definieren kann, die insbesondere parallel zu zumindest einer der Längskanten des Klebebandes verläuft, wobei diese Linie den Streifen der Klebmassenschicht - bei Aufsicht auf diesen Streifen - in zwei gleich große Flächenbereiche aufteilt. In bevorzugter Weise ist das Klebeband gedanklich durch eine Folge von Klebebandabschnitten gebildet, für die jeweils der entsprechende darauf befindliche Klebmassenabschnitt durch die imaginäre Linie in zwei Teile gleicher Fläche geteilt wird.

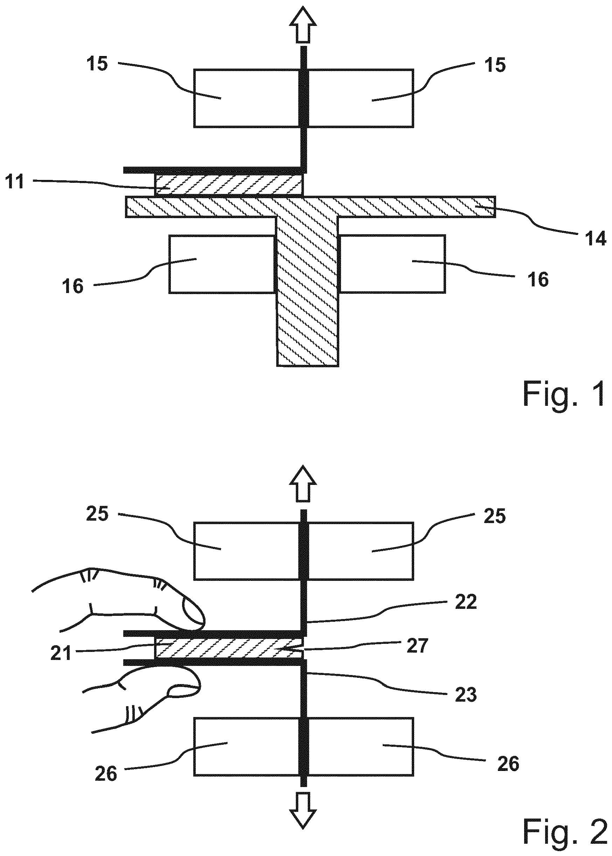

Ein erfindungsgemäßer Streifen mit nicht geradlinigen Kanten kann etwa derart ausgeführt sein, dass er eine linke und eine rechte Begrenzungskante aufweist, wobei zumindest eine dieser beiden Kanten ungerade ist, derart, dass die ungerade Kante Vorsprünge aufweist, die an ihren am weitesten vorspringenden Stellen stetig differenzierbar sind und eine zur imaginären Linie parallel verlaufende Tangente aufweisen; insbesondere solche Vorsprünge, die an ihren am weitesten vorspringenden Stellen gerundet ausgeführt sind. Solche Streifenformen werden beispielweise in der EP 1 948 545 A definiert. Auf die in den Ansprüchen der WO 2007/48695 A und der EP 1 948 545 B beschriebenen Linienformen und denen der in den Figuren dieser Schriften gezeigten Linienformen -insbesondere in den Figuren 1, 2, 3, 4, 5, 6 und 7 der WO 2007/48695 A - samt der dazugehörigen Offenbarung sei explizit verwiesen, diese Linienformen sind auch für die vorliegende Erfindung hervorragend realisierbar. Insbesondere vorteilhaft sind symmetrische Wellenformen gemäß der Figur 7 der WO 2007/48695 A und hiervon abgewandelte Varianten, etwa mit einer Wellenkante und einer geraden Kante, mit Wellenkanten anderer Krümmung oder mit solchen Wellenkanten, deren Maxima gegeneinander verschoben sind. So können beispielsweise auch an der imaginären Linie gespiegelte Kantenformen realisiert sein.

Ein erfindungsgemäßer Streifen mit nicht geradlinigen Kanten kann weiterhin derart ausgeführt sein, dass sich zumindest seine eine Begrenzungskante in Form einer sich parallel zur imaginären Linie erstreckenden Kurve ausgebildet ist und durch eine Abfolge von ansteigenden und abfallenden Kurvenabschnitten charakterisiert ist, so dass zwischen einem jeweiligen ansteigenden Kurvenabschnitt und einem darauf folgenden abfallenden Kurvenabschnitt im für den durch diese beiden Kurvenabschnitte gebildeten Kurvenbereich ein Maximum oder eine Mehrzahl von Maxima gebildet wird, und so dass zwischen einem jeweiligen abfallenden Kurvenabschnitt und einem darauf folgenden ansteigenden Kurvenabschnitt im für den durch diese beiden Kurvenabschnitte gebildeten Kurvenbereich ein Minimum oder eine Mehrzahl an Minima gebildet wird, wobei die Steigung im jeweils ansteigenden Kurvenabschnitt und im jeweils abfallenden Kurvenabschnitt nicht denselben Betrag aufweisen.
Solche auch für die vorliegende Erfindung vorteilhaften Kurvenverläufe zeigt beispielweise die EP 2 130 887 A, auf die in den Ansprüchen beschriebenen Linienformen und die in den Figuren dieser Schriften gezeigten Linienformen -insbesondere in den Figuren 2, 3, 3a, 4, 5, 6 und 7 - samt der dazugehörigen Offenbarung sei explizit verwiesen.
Weitere Kantenformen für nicht geradlinig verlaufende Streifenkanten, die im Sinne der vorliegenden Erfindung realisiert werden können, zeigt die EP 2 615 049 A; es sei insbesondere verwiesen auf die Ansprüche und die Figuren 2, 3, 4, 6, 6, 7, 8, 9 und die dazugehörigen Erläuterungen, wobei die dort gezeigten Geometrien auf einen Streifen gemäß der vorliegenden Erfindung übertragen werden.

Auf der unteren Seite des Hauptträgers können auch mehrere - insbesondere jeweils zusammenhängende - spaltfähige Systeme vorgesehen sein, etwa in Form mehrerer - nicht miteinander verbundener -geradliniger oder nicht geradliniger - etwa wellenförmiger - Streifen oder dergleichen.
Eine solche Ausführungsform weist zwei, drei oder mehr in Längsrichtung des Klebebandes parallel verlaufende Streifen auf, die jeweils eine Sollbruchfläche aufweisen. Diese Sollbruchflächen können insbesondere in einer Weise realisiert sein, wie dies im Rahmen für Sollbruchflächen dieser Schrift näher erläutert ist, etwa durch Verwendung flächig spaltbarer Papiere, spaltbarer Laminate aus zwei oder mehreren Papieren, zwei oder mehrerer Folien, zwei oder mehrerer anderer flächiger Materialien oder auch durch Verwendung von Mischlaminaten, etwa aus Papier und Folie; weiterhin durch Oberflächenbeschichtungen der Hauptträgerschicht, die eine Abspaltung des darunter liegenden Streifenmaterials erlauben (siehe zu Details weiter oben). Andere Ausführungen der Sollbruchflächen lassen sich ebenfalls realisieren.
Es ist von Vorteil, wenn der erste dieser Streifen der ihm nächsten Längskante des Klebebandes einen Abstand aufweist, wie dies für das Klebeband mit einem Streifen vorstehend erläutert ist, insbesondere auch mit den dort angegebenen Maßen.

Ein System mit zwei Streifen kann beispielweise auch einen Streifen mit zumindest einer nicht geradlinigen, insbesondere wellenförmigen Kante - insbesondere zwei nicht geradlinige, insbesondere wellenförmige Kanten - aufweisen, etwa wie dies in der WO 2011/144466 A gezeigt ist.

Die rückseitigen Klebmassenschichten, insbesondere mit linearer Streifenform [solche mit zwei parallelen Kanten in Längsrichtung (**ℓ**) des Klebebandes] weisen beispielweise jeweils und unabhängig voneinander Breiten ( 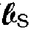 ) von 3 mm bis 30 mm, besonders von 5 bis 18 mm, ganz besonders von 15 mm und von 9 mm auf. Wellenförmige Klebesysteme können beispielweise Breiten (als Breite eines nicht linear verlaufenden Streifens ( 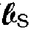 ) wird die maximale Ausdehnung des jeweiligen Streifens in Querrichtung ( 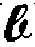 ) verstanden) von 20, 30 oder 40 mm haben. Die vorgenannten Angaben schränken die wählbaren Breiten grundsätzlich aber nicht ein. Sofern nur eine streifenförmige rückseitige Klebmassenschicht vorliegt, ist es ebenfalls von Vorteil, hierfür die vorgenannten Abmessungen zu wählen.

In vorteilhafter Anpassung an die jeweilige Anwendung kann bevorzugt ebenfalls eine Variante des erfindungsgemäßen Klebebandes eingesetzt werden, bei der die einzige in Streifenform vorliegende rückseitige Klebmassenschicht oder - bei mehreren Streifen - bei der die der Längskante nächstliegende rückseitige Klebmassenschicht direkt an dieser Längskante angrenzt, also nicht eingerückt ist.

Die Spaltschichten (Sollbruchflächen) der erfindungsgemäßen Klebebänder, insbesondere der vorstehend diskutierten Ausführungsformen, können beispielsweise wie folgt gestaltet sein:
Als spaltfähiger Träger kommen alle spaltfähigen flächigen Trägermaterialien in Frage, insbesondere leicht spaltende Papiere, Kraftpapiere, Papierverbundsysteme (beispielsweise Duplexpapiere und geleimte Papiersysteme), Folienverbundsysteme (beispielsweise geleimte Foliensysteme), polymere Verbundsysteme (beispielsweise coextrudierte polymere Verbundsysteme) und polymere Vliesstoffe.

Vorteilhaft wird ein spaltfähiger Träger eingesetzt, welcher eine deutlich geringere Spaltfestigkeit als ein Träger aufweist, welcher Zugkräfte aufnehmen muss. Insbesondere bevorzugt wird ein spaltfähiger Träger verwendet, der einen deutlich geringen Weiterreißwiderstand aufweist als ein Träger oder eine Trägerschicht, die die eigentlichen Zugkräfte in der Hauptebene des Klebebands (also als der Hauptträger H) aufnimmt, um die beiden Materialbahnen miteinander zu verbinden. Somit wird der Systemträger aufgespalten, bevor der Hauptträger zerstört wird. Das oder die spaltfähigen Systeme basieren bevorzugt auf Papier. Hierfür kommen beispielsweise insbesondere folgende Papiere oder Papierverbundsysteme in Frage:
- Geleimte hochverdichtete Papiere
- Leicht spaltbare Papiersysteme, z. B. nicht nassfeste Papiere
- Kraftpapiere (beispielsweise beidseitig glatte Kraftpapiere - insbesondere geeignet gezeigt hat sich ein Kraftpapier von 55 µm Dicke und einem Flächengewicht von 65 g/m²)
- Duplexpapiere (definiert zusammenlaminierte Papiere, der Spaltvorgang verläuft extrem homogen; es entstehen keine Spannungsspitzen, z. B. durch inhomogene Verdichtung. Diese Papiere werden auch zur Herstellung von Tapeten und Filtern eingesetzt.)
- Spaltfähige Systeme, bei welchen die Spaltkräfte über die Größe der Verklebungspunkte bestimmt werden; solche spaltfähigen Systeme werden beispielsweise in der DE 198 41 609 A1 beschrieben.

Als chemische Substanzen, die zur Verbindung zweier voneinander lösbarer Trägerschichten oder anderer voneinander lösbarer Schichten (etwa der unteren Klebeschicht von einer Trägerschicht) eingesetzt werden können, kommen etwa Zusammensetzungen in Frage, die neben einem Binder noch trennwirksame Substanzen und elastifizierende Zusätze enthalten und insbesondere wasserbasiert herstellbar und/oder beschichtbar sind. Solche Zusammensetzungen können beispielweise 10 bis 90 Gew.-% Bindemittel, 10 bis 90 Gew.-% Trennmittel, gegebenenfalls bis zu 60 Gew.-% Elastifiziermittel, bis 30 Gew. Füllstoffe sowie Verdickungsmittel enthalten. Als Bindemittel werden bevorzugt modifizierte Stärken, als Trennmittel bevorzugt Talkum, Stearylderivate oder Dispersionen von polymeren Silikon und fluorfreien Trennmitteln, und als Elastifiziermittel bevorzugt wasserlösliche Polyglykole oder Gummi Arabicum eingesetzt. Eine weitere erfindungsgemäß hervorragend zur Erzeugung der Oberflächenbeschichtung einsetzbare Zusammensetzung umfasst als Bindemittel zumindest eine Polysaccharidkomponente - wie beispielweise Stärke oder Stärkederivate - und eine Tensidkomponente aus einem oder mehreren Tensiden - wie beispielweise Di-Natrium-n-Octadecylsulfosuccinat, Natrium-Dialkylsulfosuccinat, Na-n-Dodecylsulfat, NatriumLaurylsulfat, Ammonium-Laurylsulfat, Natrium-Oleylcetylalkoholsulfat, Fettalkoholpolyglycol-ether, Fettalkohol-ethoxylat, Nonylphenolethoxylat - und gegebenenfalls elastifizierende Zusätze - wie beispielweise Polyglykole oder Gummi Arabicum).

Solche Zusammensetzungen sind beispielsweise in den Schriften EP 1 076 026 A und EP 2 116 581 A als Kaschiermassen beschrieben und lassen sich auch für die vorliegende Erfindung gut nutzen.

Als chemische Substanz kann weiterhin eine Zusammensetzung auf Basis polymerer Verbindungen eingesetzt werden. Erfindungsgemäß können sehr vorteilhaft solche Polymere eingesetzt werden, wie sie in der WO 99/46196 A offenbart sind, dort insbesondere auf Seite 9, Zeilen 15 bis 29. So kann das Polymer für die Polymerschicht insbesondere vorteilhaft gewählt werden aus der Gruppe umfassend Polyvinylchloride, Polyvinylidenchlorid, Polyvinylalkohole, Polyvinylacetate, Polyvinylpyrrolidone, Copolymere von Vinylchlorid und Vinylacetat. Als Additive können beispielsweise Benetzungsmittel, Entschäumer, Weichmacher und/oder Fungizide eingesetzt werden. Ein bevorzugtes, in der vorstehend genannten Schrift offenbartes und auch in der vorliegenden Erfindung hervorragend einzusetzendes Polymer ist ein repulpierbares Polymer, beispielsweise auf Polyvinylalkoholbasis, vorzugsweise außerdem umfassend einen oder mehrere Weichmacher. Als Weichmacher werden besonders bevorzugt Verbindungen wie Polyole (beispielweise Diethylenglycol), hydroxy-modifizierte Kautschuke oder eine Kombination aus beidem eingesetzt.

Als weiteres erfindungsgemäß hervorragend einsetzbares System für Polymerschichten für das Verbindungselement haben sich Grundierungsmittel herausgestellt, wie sie beispielweise aus dem Bau- und Heimwerkerbereich zur Vorbereitung von Anstrichen, Putzen, Klebstoffen und Bodenausgleichmassen bekannt sind und dort insbesondere zur Vorbehandlung stark saugfähiger Substanzen wie beispielsweise Gipsbaustoffen oder Spanplatten eingesetzt werden. Hier sei insbesondere auf die Grundierungsmittel auf Polyacrylat-Basis verwiesen.

Bei dem erfindungsgemäßen Klebeband sind die obere und die untere Klebmassenschicht jeweils außenliegende Klebmassenschichten, also insbesondere solche Klebmassenschichten, die während der Anwendung eine Verklebung zu einer jeweiligen Substratoberfläche - bei der Anwendung im Verfahren des fliegenden Rollenwechsels insbesondere eine Verklebung zu einer jeweiligen Flachbahn - zu bewirken vermögen. Die Bezeichnung als außenliegende Klebmassenschichten soll nicht ausschließen, dass die erste Klebmassenschicht und/oder die zweite Klebmassenschicht vor der Anwendung - insbesondere zur besseren Handhabung und/oder Lagerung und/oder zum Schutz der offenen Klebmassenflächen - jeweils mit einer Trennabdeckung (auch als "Liner" oder "Releaseliner" bezeichnet) abgedeckt sein können. Die Trennabdeckung wird dann jeweils entfernt, bevor die offene Klebmassenfläche für die Anwendung benötigt wird.
Als Material für die Trennabdeckung können dabei alle hierfür an sich bekannten trennwirksamen Materialien eingesetzt werden; dabei handelt es sich insbesondere um antiadhäsive Materialien oder antiadhäsiv beschichtete (insbesondere silikonisierte) Materialien, wie beispielweise Silikone, silikonisierte Papiere, Glassinepapiere, beschichtete oder unbeschichtete HDPE-Liner (Niederdruck-Polyethylen), beschichtete oder unbeschichtete LDPE-Liner (Hochdruck-Polyethylen), beschichtete oder unbeschichtete MOPP- und BOPP-Liner (monoaxial bzw. biaxial orientiertes Polypropylen), beschichtete oder unbeschichtete PET-Liner (Polyethylenterephthalat) und dergleichen.
Insbesondere die Trennabdeckung auf der oberen Klebmassenschicht kann einen oder mehrere Schlitze, eine oder mehrere Perforationen oder dergleichen aufweisen, insbesondere in Längsrichtung des Klebebandes. So kann in einer bestimmten Phase der Splice-Vorbereitung ein Teil der Trennabdeckung auf der oberen Klebemassenschicht abgezogen werden, während ein anderer Teil dort vorerst noch verbleibt.

Für die Eignung des erfindungsgemäßen Klebebandes im bestimmungsgemäßen Einsatz sind die auf die Sollbruchfläche einwirkenden Kräfte, die benötigt werden, um den Spaltvorgang im fliegenden Rollenwechsel einzuleiten und die Kraft, die benötigt wird, um die Sollbruchfläche weiterzuspalten, von Interesse. Diese Werte sollten so eingestellt werden, dass ein An- und Weiterspalten der Sollbruchstelle nur bei der bestimmungsgemäßen Verwendung stattfindet, dann aber auch zuverlässig, ohne den Vorgang des fliegenden Rollenwechsels zu behindern. Dabei sollte vorteilhaft das Spaltsystem derart eingestellt werden, dass einerseits das Risiko des ungewollten Anspaltens in der Beschleunigungsphase vermieden wird, und andererseits ein anwendungsgerechtes Spalten des Splicebandes ohne Beschädigung der zu verbindenden Materialbahnen gewährleistet wird.
Zur Überwindung der Spaltfestigkeit an der vorderen Kante wird dabei eine erhöhte, maximale Kraft zum Anspalten des Systems benötigt (Anspaltkraft, Initialspaltkraft zum Einleiten des Spaltvorgangs der Sollbruchstelle). Des Weiteren benötigt man eine Kraft auf niedrigerem Niveau zum Spalten über die gesamte Breite des Splicebandes (Weiterspaltkraft). Das Produkt aus der aufgewendeten Kraft und der Breite des Spaltsystems ist die Arbeit, die zum Spalten benötigt wird (Spaltarbeit).
Die Anspaltkraft sollte so hoch eingestellt sein, dass das Produkt durch die bei der Beschleunigung wirkenden Fliehkräfte und aerodynamischen Kräfte nicht vorzeitig öffnet, zum anderen muss die Spaltarbeit so gering eingestellt sein, dass die benötigte Arbeit für das komplette Durchspalten des Sollbruchfläche nicht zu Abrissen führt. Durch die Ausgestaltung der erfindungsgemäßen Klebebänder lassen sich für diese Parameter hervorragende Werte realisieren.

In einer bevorzugten Ausführungsform der Erfindung liegt die zum Aufspalten der Sollbruchstelle des erfindungsgemäßen Klebebandes benötigte Anspaltkraft im Bereich von 0,1 N/cm bis zu 2,0 N/cm (Newton pro Zentimeter Verklebungsbreite), und die zum Aufspalten der Sollbruchfläche benötigte Kraft (Weiterspaltkraft) zwischen 5 und 50 cN/cm. Alle Angaben zu Anspaltkräften und Weiterspaltkräften in dieser Schrift beziehen sich auf die Bestimmung nach der im Abschnitt "Allgemeine Bestimmungsmethoden" angegebenen Methode.

Die Herstellung der für das erfindungsgemäße Klebeband verwendeten Selbstklebemassen findet vorteilhaft durch Compoundierung des Kautschuks und der weiteren Komponenten und optionaler Mastikation bzw. Degradation des Kautschuks, zum Beispiel nach bekannten Verfahren, statt. Die Herstellung von Schichten der Selbstklebemasse bei der Erzeugung des erfindungsgemäßen Klebebandes kann gleichfalls durch übliche, dem Fachmann bekannte Beschichtungsverfahren erfolgen. Hierbei kann die Selbstklebmasse inklusive der Additive, gelöst in einem geeigneten Lösemittel, mittels beispielsweise Rasterwalzenauftrag, Kommarakelbeschichtung, Mehrwalzenbeschichtung oder in einem Druckverfahren auf eine Trägerfolie oder Trennfolie beschichtet und anschließend das Lösemittel in einem Trockenkanal oder -ofen entfernt werden. Alternativ kann die Beschichtung der Trägerfolie oder Trennfolie auch in einem lösemittelfreien Verfahren erfolgen, insbesondere dann, wenn auch die Compoundierung lösemittelfrei erfolgt ist. In dem Extruder können weitere Prozessschritte wie das Mischen mit den beschriebenen Additiven, Filtration oder eine Entgasung erfolgen. Die Schmelze wird dann mittels eines Kalanders auf den entsprechenden Träger beschichtet oder zunächst auf einen temporären Träger, von dem dann umkaschiert werden kann.
Mögliche Verfahren, nach denen die Klebemassen hergestellt werden können, finden sich in der DE 198 06 609 A1 sowie in den Schutzrechten WO 94/11175 A1, WO 95/25774 A1, WO 97/07963 A1.

Weiterhin betrifft die Erfindung ein Spliceverfahren für den fliegenden Rollenwechsel von auf Rollen aufgewickelten Flachbahnmaterial, insbesondere wie es vorstehend bereits kurz dargestellt wurde. Bei einem erfindungsgemäß bevorzugten Verfahren wird zur Vorbereitung der die oberste Wicklung bildende Flachbahnabschnitt einer Rolle einer neuen Flachbahn mit einem erfindungsgemäß ausgestalteten Klebeband, das eine obere Selbstklebemassenschicht, einen als flächige Sollbruchstelle angepassten inneren Klebebandbereich und eine untere Selbstklebemasse an der unteren Seite des inneren Klebebandbereichs, und bei dem als Selbstklebemasse für zumindest die obere Selbstklebemassenschicht eine Naturkautschukklebemasse eingesetzt wird, an dem die darunterliegende Wicklung bildenden Flachbahnabschnitt fixiert. Dies geschieht bevorzugt in einer Weise in der Art, dass ein zum Spliceverfahren benötigter Flächenbereich der vorderseitigen, ersten Klebmassenschicht offenliegt. Daraufhin wird die so ausgerüstete neue Rolle neben eine fast gänzlich abgespulte zu ersetzende alte Rolle platziert und auf die im Wesentlichen gleiche Umfangsgeschwindigkeit wie diese beschleunigt. Dann wird die Rolle gegen die von der alten Rolle ablaufende alte Bahn gedrückt, wobei der offenliegende Flächenbereich der vorderseitigen Klebmassenschicht des Klebebandes mit der alten Bahn bei im Wesentlichen gleichen Geschwindigkeiten der Bahnen verklebt. Um die Verklebungszuverlässigkeit zu erhöhen, ist es vorteilhaft, von der Rückseite der Bahn während des Verklebungsvorganges mit einer Andruckvorrichtung (Walze, Bürste oder dergleichen) gegenzudrücken. Zugleich mit oder unmittelbar nach mit der Verklebung findet zumindest in den Sollbruchflächen des Klebebandes eine flächige Aufspaltung bzw. Schichtentrennung statt. Die auf den Klebebandresten jeweils verbleibenden Reste des Materials der Sollbruchstelle sorgen dafür, dass nach der Aufspaltung bzw. Trennung keine klebenden Bereiche offenliegen.

In einer Weiterentwicklung des erfinderischen Verfahrens wird das Klebeband rechtwinklig zur laufenden Flachbahn verklebt. In einer vorteilhaften Variante des erfinderischen Verfahrens kann die Verklebung des Klebebandes auch in einem spitzen Winkel von bis zu 30° zur laufenden Flachbahn, insbesondere von bis zu 5°, erfolgen.

Bei dem Spliceverfahren wird in vorteilhafter Vorgehensweise ein erfindungsgemäß ausgestaltetes Klebeband in einer geraden Linie unter die oberste Wicklung der neuen Flachbahn auf eine neue Flachbahnrolle verklebt. Dabei erfolgt die Verklebung so, dass ein Teil des Klebebandes für die Verklebung mit der ablaufenden Bahn frei liegen bleibt. Bevorzugt wird das Klebeband in gerader Linie unter die oberste Wicklung der Flachbahn der neuen Rolle verklebt, so dass ein Teil des Klebebandes frei bleibt, während die rückseitige(n) Klebmassenschicht(en) des Klebebandes mit der darunter liegenden Flachbahnwicklung verklebt und damit die oberste Bahnwicklung sichert, wobei gegebenenfalls zunächst nur ein Teil der gegebenenfalls auf der ersten, vorderseitigen Klebmassenschicht befindlichen Abdeckung abgezogen wurde, so dass der zum Spliceverfahren benötigte Teil der Klebmassenschicht noch mit der Abdeckung abgedeckt ist und die Rolle in diesem Zustand keine freie klebende Fläche aufweist. Daraufhin wird zur abschließenden Vorbereitung des Spliceverfahrens die gegebenenfalls noch vorhandene restliche Abdeckung entfernt, worauf die so ausgerüstete neue Rolle neben eine fast gänzlich abgespulte, zu ersetzende alte Rolle platziert wird und auf die im Wesentlichen gleiche Umfangsgeschwindigkeit wie diese beschleunigt wird, dann gegen die von der alten Rolle ablaufende alte Bahn gedrückt wird, wobei der offenliegende Bereich der vorderseitigen Klebmassenschicht des Klebebandes mit der alten Bahn bei im Wesentlichen gleichen Geschwindigkeiten der Bahnen verklebt, während zugleich oder unmittelbar anschließend das Klebeband im Wesentlichen in dem Bereich, in dem es mit der zweiten, rückseitigen Klebmassenschicht (bzw. den zweiten, rückseitigen Klebmassenschichten) ausgerüstet ist, spaltet und das bzw. die rückseitigen Klebmassenschicht(en) mit den Resten der Sollbruchfläche nichtklebend abdeckt.

In weiterer Variante wird ein erfindungsgemäßes Klebeband in Splice-Verfahren eingesetzt, bei denen die Vorbereitung der neuen Rolle nicht durch ein Unterkleben des Klebebandes unter das Bahnende der neuen Bahn bewirkt wird, sondern durch ein Überkleben. Solche Klebebandausführungen und Verfahren sind beispielsweise in den Schriften EP 970 905 A oder WO 2003/024850 A beschrieben, die dort dargestellten Spliceverfahren lassen sich mit entsprechenden Klebeband-Ausführungen mit erfindungsgemäß ausgestalteten Sollbruchstellen ebenfalls hervorragend durchführen und sollen von der Erfindung umfasst werden.

### Allgemeine Bestimmungsmethoden

Sofern im Einzelnen nicht anders angegeben, beträgt das Prüfklima bei allen Messungen: Temperatur 23 ± 1 °C; 50 ± 5 % relativer Luftfeuchte, Luftdruck 1013 ± 5 mbar.

### 1. Molmassen

Die Angaben der zahlenmittleren Molmasse Mn und der gewichtsmittleren Molmasse Mw in dieser Schrift beziehen sich auf die Bestimmung per Gelpermeationschromatographie (GPC).

Die Bestimmung erfolgt an 100 µl klarfiltrierter Probe (Probenkonzentration 4 g/l). Als Eluent wird Tetrahydrofuran mit 0,1 Vol.-% Trifluoressigsäure eingesetzt. Die Messung erfolgt bei 25 °C. Als Vorsäule wird eine Säule Typ PSS-SDV, 5 µm, 10³ Å, 8,0 mm * 50 mm (Angaben hier und im Folgenden in der Reihenfolge: Typ, Partikelgrösse, Porosität, Innendurchmesser * Länge; 1 Å = 10⁻¹⁰ m) verwendet. Zur Auftrennung wird eine Kombination der Säulen des Typs PSS-SDV, 5 µm, 10³ Å sowie 10⁵ Å und 10⁶ Å mit jeweils 8,0 mm * 300 mm eingesetzt (Säulen der Firma Polymer Standards Service; Detektion mittels Differentialrefraktometer Shodex RI71). Die Durchflussmenge beträgt 1,0 ml pro Minute. Die Kalibrierung erfolgt bei Polyacrylaten gegen PMMA-Standards (Polymethylmethacrylat-Kalibrierung) und sonst (Harzen, Elastomeren) gegen PS-Standards (Polystyrol-Kalibrierung).

### 2. Erweichungspunkt

Die Bestimmungen des Erweichungspunkts T_{E} erfolgen durch das Ring-Kugel-Verfahren entsprechend DIN EN 1427:2007, also auf das Ring-Kugel-Verfahren gemäß DIN EN 1427:2007 bei entsprechender Anwendung der Bestimmungen, wobei jedoch statt des dort angegeben Bitumens die Probe der entsprechenden Substanz (zum Beispiel Oligomer- bzw. Polymerprobe) bei ansonsten beibehaltener Verfahrensführung untersucht wird; die Messungen erfolgen im Glycerolbad.

### 3. Oberflächenenergien

Oberflächenenergien (Oberflächenspannungen) werden nach DIN ISO 8296 bestimmt. Hierfür lassen sich zum Beispiel Testtinten der Fa. Softal einsetzen. Die Tinten sind im Bereich von 30 bis 72 mN/m erhältlich. Die Tinte wird mit einem Tintenstrich auf die Oberfläche aufgetragen. Zieht sich der Tintenstrich in weniger als 2 Sekunden zusammen, wird die Messung mit einer Tinte mit niedrigerer Oberflächenenergie wiederholt. Bleibt der Tintenanstrich länger als 2 Sekunden unverändert, wird die Messung mit einer Tinte mit höherer Oberflächenenergie wiederholt, bis die 2 Sekunden erreicht sind. Der auf der Flasche angegebene Wert entspricht dann dem der Oberflächenenergie des Films.

### 4. Anspaltkraft

Zur Bestimmung der Anspaltkraft (Initialkraft zum Einleiten des Spaltvorgangs der Sollbruchstelle) werden Lappenmuster hergestellt (zum Beispiel in Größe DIN A4), die eine Trägerschicht mit einer ersten und einer zweiten Oberfläche umfassen, wobei auf der Seite der ersten Oberfläche der Trägerschicht mittelbar oder unmittelbar vollflächig eine erste Klebmassenschicht vorgesehen ist (entsprechend dem Aufbau dem Klebeband, für das die Anspaltkraft ermittelt werden soll), und wobei die zweite Oberfläche der Trägerschicht insbesondere vollflächig eine zweite Klebmassenschicht vorgesehen ist, wobei die zweite Oberfläche der Trägerschicht erfindungsgemäß mit einer Oberflächenbeschichtung modifiziert sind und wobei die Vorgaben des Hauptanspruchs eingehalten werden. Sollen Klebebänder untersucht werden, bei denen die Sollbruchflächen in Längsrichtung des Klebebandes Unterbrechungen aufweisen (segmentiert sind), so werden Lappenmuster mit entsprechend unterbrochener zweiter Klebeschicht hergestellt.

Sodann wird eine Kante des Lappenmusters derart abgeschnitten, dass eine glatte Schnittkante entsteht. Ein reißfestes Papier wird auf die zweite Klebmassenschicht des zu prüfenden Musters aufgelegt und die freie Klebmassenoberfläche wird mit einem silikonisierten Papier abgedeckt. Das reißfeste Papier wird leicht mit dem Finger angestrichen, um Lufteinschlüsse zu vermeiden. Danach wird mit dem Handroller zweimal zügig über den Verbund gerollt, um eine einwandfreie Verklebungsfestigkeit zu erreichen. Die Verklebung ist so herzustellen, dass das Ende des reißfesten Papiers an der glatten Kante über den Klebebandkörper heraus ragt. Mit dem Stahllineal werden auf Seiten der glatten Kante des Verbundes Streifen herausgeschnitten, deren Breite (parallel zur glatten Kante) 15 mm und deren Länge (rechtwinklig zur glatten Kante) ca. 20 cm beträgt und an deren einem Ende sich das überstehende Papierende befindet. Dieses überstehende Papierende dient im Folgenden als Anfasser.

Die Messvorrichtung für die Messung der Anspaltkraft ist schematisch in Figur 1 dargestellt. Eine wie vorstehend beschrieben hergestellte Probe 11 wird in eine Zugprüfmaschine eingespannt, wobei das silikonisierte Papier auf der vorderseitigen Klebmassenschicht abgezogen wird und die Probe mit seiner nun freiliegenden Oberfläche waagerecht auf einem in die Zugmaschine (mittels Einspannvorrichtung 16) eingespannten Träger 14 fest verklebt wird (in der Figur untenliegend), der Anfasser des Papiers 12 auf der rückseitigen Klebmassenschicht wird in die Zugeinheit (mittels Einspannvorrichtung 15) der Zugprüfmaschine eingespannt. Es ist darauf zu achten, dass vor Beginn der Messung die Sollbruchstelle noch nicht angespalten sein darf. An dem Anfasser des auf der rückseitigen Klebmassenschicht aufgebrachten Papiers 12 wird dann mit einer Geschwindigkeit von 300 mm/min derart gezogen, dass die Probe in einem Winkel von 90 ° spaltet. Die Spaltung findet dabei in der Sollbruchstelle statt. Dabei wird die Initialkraft registriert (diese entspricht dem Maximum der Kraft-Weg-Kurve), der gemessene Wert wird in Kenntnis der tatsächlichen Musterbreite auf 1 cm Probenbreite normiert. Der Mittelwert aus drei Messungen wird angegeben (in N/cm).

### 5. Weiterspaltkraft

Zur Bestimmung der Weiterspaltkraft werden entsprechende Probestreifen hergestellt mit dem einzigen Unterschied, dass sowohl auf der Oberfläche der ersten als auch auf der Oberfläche der zweiten Klebemassen reißfeste Papiere mit Anfassern vorgesehen sind (auf der unteren Oberfläche statt des silikonisierten Papiers).

Zur Messung der Weiterspaltkraft - siehe hierzu Figur 2 - wird die so vorbereitete Probe 21 zunächst an einer der schmalen Kanten händisch angespalten (in der Figur 2 angedeutet durch den Spalt 27). Sodann wird die Probe 21 an beiden Anfassern der eindeckenden Papiere 22 und 23 in die Klemmvorrichtungen 25, 26 einer Zugprüfmaschine eingespannt und derart fixiert (beispielsweise durch Halten mit den Fingern), dass sie senkrecht auf die beiden Zugrichtungen steht und sich der Spaltvorgang bei Inbetriebnahme der Zugprüfmaschine am Spalt 27 fortsetzt. Es wird an beiden Anfassern gleichermaßen gezogen, dass die Probe mit einer Geschwindigkeit von 300 mm/min in einem Winkel von 180 ° fortspaltet. Die Spaltung findet dabei in der Sollbruchstelle statt. Angegeben wird die auf 1 cm Musterbreite normierte Kraft, die benötigt wird, um den Spaltvorgang weiterzuführen (angegeben in cN/cm).

### Experimenteller Teil

### Messmethoden

### Lagerung

Vor den im Weiteren beschriebenen Tests werden die Muster für mindestens 24 Stunden bei 23 °C und 50% rel. Luftfeuchtigkeit gelagert.

### 6. Klebkraft

Die Prüfung der Schälfestigkeit (Klebkraft) erfolgte in Anlehnung an PSTC-1.

Ein 2 cm breiter Streifen des Selbstklebebandes, bestehend aus einem 62 µm dicken Papierträger und einer darauf aufgebrachten 55 µm dicken Klebebeschichtung wird auf dem Prüfuntergrund in Form einer Polyethylen-Platte (PE-Platte) (Oberflächenenergie 29 mN/m, siehe Abschnitt "Allgemeine Bestimmungsmethoden") durch fünfmaliges doppeltes Überrollen mittels einer 4 kg Rolle verklebt.

Die Oberfläche der PE-Platte wird zwei Stunden vor der Messung mit Ethanol gereinigt. Die Platte wird eingespannt, und der Selbstklebestreifen über sein freies Ende an einer Zugprüfmaschine unter einem Schälwinkel von 180° mit einer Geschwindigkeit von 300 mm/min (beziehungsweise mit den anderen angegebenen Geschwindigkeiten) abgezogen, und die dafür notwendige Kraft ermittelt. Die Messergebnisse sind in N/cm angegeben und über drei Messungen gemittelt und normiert auf die Breite des Streifens in N/cm angegeben.

Die initiale Klebkraft (Klebkraft PE) wurde direkt im Anschluss an das Verkleben und max. 10 min nach der Verklebung gemessen.

### 7. Mikroscherweg-Messung

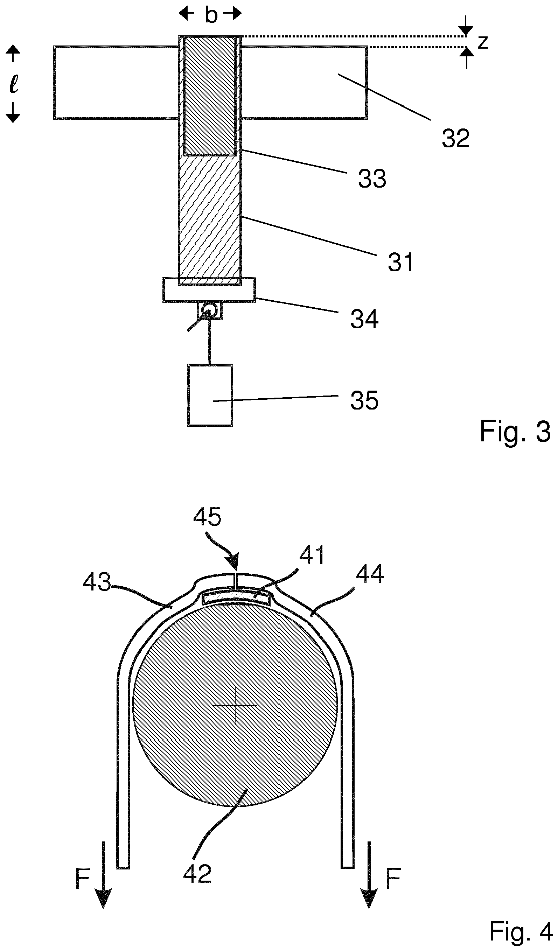

Die Messanordnung ist in Figur 3 illustriert.

Aus dem zu untersuchenden Klebeband wurden 10 mm x 50 mm große Flächenstücke geschnitten und das so erhaltene Klebebandmuster (31) derart auf eine polierte, temperierbare, mit Aceton gereinigte 13 mm breite Stahl-Prüfplatte (32) verklebt, dass die Längsrichtung des Klebebandmusters in Querrichtung der Stahlplatte ausgerichtet war, die Verklebungsfläche die Dimensionen l x b = 13 mm x 10 mm betrug und das Klebeband die Stahlplatte auf einer Seite um ein Stück der Länge z = 2 mm überragte. Zur Fixierung wurde das Klebeband anschließend mit einer 2 kg-Stahlrolle und einer Geschwindigkeit von 10 m/min sechsmal überrollt. Auf der der Stahlplatte (32) abgewandten Seite des Klebebandes (31) wurde das Klebeband (31) bündig mit der die Stahlplatte um das Stück der Länge z überragenden Kante mit einem stabilen Klebestreifen (33) (Dimensionen 4 mm x 25 mm; Träger 190 µm dicke PET-Folie) verstärkt, der als Auflage für einen Wegmessfühler (nicht dargestellt) diente. Die so vorbereitete Anordnung wurde derart senkrecht aufgehängt, dass das die Stahlplatte (32) überragende Stück der Länge z des Klebebandmusters (31) nach oben zeigte. Die Stahl-Prüfplatte (32) mit der verklebten Probe (31) wurde auf 40 °C temperiert und das zu vermessende Klebebandmuster (31) am unteren Ende mittels einer Klammer (34) zum Zeitpunkt t0 = 0 mit einem Gewicht (75) von 200 g belastet. Gemessen mittels des Wegmessfühlers wurde die Deformation der Probe unter Scherung über einen Zeitraum von 15 Minuten (beginnend bei t0) bei einer Temperatur von 40 °C und einer relativen Luftfeuchtigkeit von 50 ± 5 %.

Angegeben wird die Scherstrecke nach 15 min (Maximalwert; während der Messung nach unten zurückgelegter Weg der oberen Kante der Probe) als Ergebnis in µm. Der so gemessene Scherweg ist ein quantitatives Maß für die innere Festigkeit der vermessenen Probe.

### 8. SAFT-Test (Shear Adhesive Failure Temperature-Test)

Dieser Test dient der Schnellprüfung der Scherfestigkeit von Klebebändern unter Temperaturbelastung. Die Messprobenpräparation entspricht der Vorbereitung der Mikroscherweg-Messung. Statt die Auslenkung jedoch bei einer konstanten Temperatur von 40 °C und einer Belastung von 200 g zu ermitteln, wird die zu messende Probe mit einem Gewicht von 50 g belastet. Die Stahl-Prüfplatte mit der verklebten Probe wird beginnend bei 25 °C mit einer Rate von 9 °C pro Minute auf die Endtemperatur von 200 °C aufgeheizt. Gemessen wird die Deformation der Probe mittels Wegmessfühler in Abhängigkeit von Temperatur und Zeit. Der maximale Rutschweg ist auf 1000 µm festgelegt, bei Überschreiten wird der Test abgebrochen. Prüfklima: Raumtemperatur 23 ± 3 °C, relative Luftfeuchtigkeit 50 ± 5%. Als Testergebnis wird die Temperatur bei Erreichen einer Deformation von 1000 µm in °C notiert.

### 9. Rolling Ball Tack

Die Messung des Rolling-Ball-Tacks erfolgte nach der Methode PSTC-6 (Test Methods for Pressure Sensitive Adhesive Tapes, 15th Edition; Herausgeber: Pressure Sensitive Tape Council, Northbrook (Illinois), USA), wobei die folgenden Abwandlungen vorgenommen wurden:
- Verwendung von Edelstahl-Kugellagerkugeln (Edelstahl 1.4401), Durchmesser 7/16 Zoll, Masse 5,7 g
- Vorbereitung der Kugeln: gründliche Reinigung mit Zellstoff und Aceton; die sauberen Kugeln werden vor der Messreihe für 15 min in einem Acetonbad gelagert (Kugeln sind vom Aceton vollständig umgeben); mindestens 30 min vor Beginn der Messung werden die Kugeln dem Acetonbad entnommen und zum Trocknen und Konditionieren offen im Normalklima (23 ± 1 °C, 50 ± 5 % rel. Feuchte) gelagert
- Jede Kugel wird nur für eine Messung verwendet.

Die Bestimmung der Anfassklebrigkeit wurde wie folgt durchgeführt: Als Maß für die Anfassklebrigkeit bei sehr kurzer Kontaktzeit wurde der so genannte "Rolling-Ball-Tack" gemessen. Ein etwa 25 cm langer Streifen des Klebebandes wurde mit der klebenden Seite nach oben unter Spannung horizontal auf der Prüfebene befestigt. Zur Messung wurde die Stahlkugel durch Herabrollen von einer 65 mm hohen Rampe (Neigungswinkel: 21 °) im Schwerefeld der Erde beschleunigt. Von der Rampe wurde die Stahlkugel unmittelbar auf die klebende Oberfläche der Probe gelenkt. Der auf der Klebemasse bis zum Stillstand der Kugel zurückgelegte Weg wurde gemessen. Die so ermittelte Rollweglänge dient hierbei als inverses Maß für die Anfassklebrigkeit der Selbstklebemasse (das heißt, je kürzer der Rollweg ist, desto höher ist die Anfassklebrigkeit und umgekehrt). Der jeweilige Messwert ergab sich (als Längenangabe in mm) aus dem Mittelwert von fünf Einzelmessungen an jeweils fünf unterschiedlichen Streifen des Klebebandes.

### 10. Heizzylindertest

Der Heizzylindertest überprüft die Beständigkeit einer Verklebung unter Temperatur- und Zugbelastung. Dies soll bei Verwendung der erfindungsgemäßen Klebebänder zur Verklebung von Folien im fliegenden Rollenwechsel zum Beispiel den Stillstand einer Produktionsmaschine simulieren. Während eines solchen kurzzeitigen Stillstandes darf die Verklebung sich nicht lösen.

Ein Metallzylinder aus Edelstahl (Außendurchmesser 50 mm, Wandstärke 1 mm) (42) mit Gestell wird in einem Wärmeschrank für mindestens 30 min aufgewärmt. Der Wärmeschrank wird dabei auf die zu prüfende Temperatur (140 °C, 160 °C) temperiert. Aus dem Klebeband werden 50 mm x 20 mm große Muster (41) ausgeschnitten. Mit Hilfe der Muster (41) werden zwei 20 mm x 150 mm lange Folienstreifen (43, 44) mittig auf Anstoß (Position 45) verklebt (Figur 4), so dass jeder Folienstreifen auf eine Länge von 25 mm vollflächig mit dem Muster bedeckt ist. Zur Fixierung der Verklebung wird die verklebte Fläche einmal mit einer 500 g Stahlrolle und einer Geschwindigkeit von 166 mm/sec überrollt. Der Prüfling wird über den Metallzylinder (42) gelegt, wobei die verklebte Fläche nach oben und außen zeigt. Anschließend werden beide Enden des Prüflings mittels einer Klammer mit einem Gewicht von jeweils 500 g belastet (resultierende Zugkraft F). Aufhängen und Belastung erfolgen innerhalb von 40-60 Sekunden nach dem Überrollen. Sobald die Gewichte befestigt sind, wird die Stoppuhr gestartet. Der Test gilt als bestanden, wenn die Verklebung sich nach 3 min noch nicht vollständig gelöst hat (Abfallen der Gewichte). Das Testergebnis wird dann mit > 180 s angegeben. Es erfolgt eine Dreifach-Bestimmung. Öffnet sich die Verklebung, wird die Zeit bis zum Herabfallen der Gewichte gestoppt und als Ergebnis in Sekunden notiert.

### Herstellung der Selbstklebmassen

Die in den Beispielen aufgeführten Selbstklebemassen wurden als Lösemittel-basierte Massen in einem Kneter mit Doppelsigmaknethaken homogenisiert. Als Lösemittel wurde Benzin (Gemisch von Kohlenwasserstoffen) verwendet. Der Kneter wurde dabei mittels Wasserkühlung gekühlt.

In einem ersten Schritt wurde zunächst der Naturkautschuk mit einem Drittel der Gesamtmenge Benzin und dem Alterungsschutzmittel und gegebenenfalls Füllstoffen für 12 Stunden bei 23 °C vorgequollen. Anschließend wurde dieser sogenannte Vorbatch für 15 min geknetet. Anschließend wurde das Harz zugegeben und 45 min geknetet. Anschließend wurden die Weichmacher oder Flüssigharze, sowie eine erste weitere Menge Benzin zugegeben. Die Benzinmenge wurde so gewählt, dass nach diesem Schritt ein theoretischer Feststoffgehalt von 50 % vorlag. Es wurde für 15 min geknetet. Anschließend wurde der letzte Teil der gesamten Benzinmenge für 30 min eingeknetet. Der finale Feststoffgehalt lag bei 30 Gew.-%.

### Herstellung der Prüfmuster

Die Selbstklebmasse wurde auf einem handelsüblichen Laborstreichtisch (zum Beispiel von der Firma SMO (Sondermaschinen Oschersleben GmbH)) mit Hilfe eines Streichmessers auf ein silikonisiertes Trennpapier beschichtet. Das Benzin wurde bei 120 °C im Umlufttrockenschrank für 10 Minuten abgedampft. Die Spaltbreite beim Beschichten wurde so eingestellt, dass nach dem Abdampfen des Lösemittels ein Masseauftrag von 55 g/m² erreicht wurde. Anschließend wurden die vom Lösemittel befreiten Filme mit einem 62 µm dicken Papierträger abgedeckt und bis zur weiteren Ausprüfung bei 23 °C und 50 % rel. Luftfeuchtigkeit gelagert.

Zur Messung wurde das silikonisierte Trennpapier abgezogen.

| Beispiel Nr. | Zielwerte | Vgl.bsp 1 | Vgl.bsp 2 | Vgl.bsp 3 | Vgl.bsp 4 | Beispiel 1 | Beispiel 2 | Beispiel 3 | Beispiel 4 | Beispiel 5 | Beispiel 6 | Beispiel 7 |
|---|---|---|---|---|---|---|---|---|---|---|---|---|
| | | | | | | | | | | | | |
| Naturkautschuk (SVR 3L) | | 51,3% | 51,3% | 61,6% | 38,0% | 49,6% | 49,6% | 49,5% | 53,2% | 51,3% | 51,3% | 48,6% |
| Festharz | | 47,6% | 0,0% | 24,7% | 34,7% | 29,7% | 39,6% | 34,7% | 34,5% | 37,3% | 37,3% | 38,8% |
| Weichmacher 1 | | 0,0% | 0,0% | 0,0% | 0,0% | 0,0% | 0,0% | 0,0% | 11,2% | 0,0% | 0,0% | 0,0% |
| Weichmacher 2 | | 0,0% | 0,0% | 0,0% | 0,0% | 0,0% | 0,0% | 0,0% | 0,0% | 10,3% | 0,0% | 11,7% |
| Weichmacher 3 | | 0,0% | 47,6% | 12,3% | 26,5% | 19,8% | 9,9% | 14,9% | 0,0% | 0,0% | 10,3% | 0,0% |
| Irganox 1076 | | 0,8% | 0,8% | 0,9% | 0,6% | 0,7% | 0,7% | 0,7% | 0,8% | 0,8% | 0,8% | 0,7% |
| Methyl-2-mercaptobenzimidazol | | 0,3% | 0,3% | 0,3% | 0,2% | 0,2% | 0,2% | 0,2% | 0,3% | 0,3% | 0,3% | 0,2% |
| | | | | | | | | | | | | |
| Kautschuk/FH-WM Verhältnis | | 1,08 | 1,08 | 1,67 | 0,62 | 1,00 | 1,00 | 1,00 | 1,16 | 1,08 | 1,08 | 0,96 |
| | | | | | | | | | | | | |
| SAFT 0,5 N [°C] | ≥ 140 | 156 | 121 | 152 | 127 | 141 | 141 | 149 | 154 | 153 | 153 | 153 |
| MSW 2 N [µm] | ≤ 250 [≤ 200] | 80 | 285 | 140 | 1261 | 224 | 169 | 117 | 101 | 94 | 104 | 189 |
| KKPE [N/cm] | ≥ 2 [≥ 3] | 6,4 | 0,2 | 1,4 | 5,7 | 3,2 | 4,9 | 3,2 | 3,3 | 3,0 | 4,1 | 4,9 |
| Tack [mm] | ≤ 20 [≤ 10] | 25 | 23 | 24 | 1 | 2 | 1 | 4 | 7 | 5 | 2 | 3 |
| Heizzylindertest 140 °C [sec] | > 180 | 176 | 150 | >180 | 4 | >180 | >180 | >180 | >180 | >180 | >180 | >180 |
| Heizzylindertest 160 °C [sec] | | - | - | 157 | - | 47 | 58 | 44 | 96 | 112 | 103 | 38 |

| | | | | | | | | | | | | |
|---|---|---|---|---|---|---|---|---|---|---|---|---|
| verwendete Rohstoffe: Naturkautschuk (SVR 3L) - Naturkautschuk Festharz: Poly-alpha-Terpenharz, R&B = 115 °C Weichmacher 1: naphthenisches Weißöl, Pour point nach DIN ISO 3016: -30 °C, Erweichungspunkt T_{E} < 30 °C; Kohlenstoffverteilung naphthenisch/parraffinisch 42/58) Weichmacher 2: Polybuten (Mn = 910 g/mol); Erweichungspunkt T_{E} < 30 °C Weichmacher 3: Flüssigharzflüssiges Kohlenwasserstoffharz auf Piperylenbasis, R&B = 10 °C; Erweichungspunkt << 30 °C (flüssig) Alterungsschutzmittel: Irganox 1076 - Alterungsschutzmittel Alterungsschutzmittel: Methyl-2-mercaptobenzimidazol Weitere Erläuterungen: Zielwerte: Es hat sich herausgestellt, dass Klebebänder für den beabsichtigten Einsatzzweck, nämlich den Einsatz im Rollenwechsel von Flachbahnen mit unpolaren Oberflächen, besonders geeignet sind, wenn die in der Tabelle genannten Zielwert eingehalten werden. Besonders hervorragende Eigenschaften im Einsatzbereich konnten für Klebebänder festgestellt werden, die sogar die bevorzugten Werte (in der Tabelle in eckigen Klammern gesetzt) eingehalten werden. Vgl.bsp = Vergleichsbeispiel Kautschuk/FH-WM Verhältnis = Verhältnis der Menge des Kautschuks zur Gesamtmenge von Festharzen und Weichmachern SAFT = Shear Adhesive Failure Temperature-Test MSW = Mikroscherweg-Messung KKPE = Klebkraft auf Polyethylen Tack = Rolling-Ball-Tack | | | | | | | | | | | | |

Die vorangegangenen Beispiele (Tabelle) zeigen die Eignung der erfindungsgemäßen Selbstklebemassen für den fliegenden Rollenwechsel. Alle Beispiele (Beispiel 1 bis 8) eignen sich als Selbstklebemassen eines Klebebandes für den fliegenden Rollenwechsel. Insbesondere erfüllen sie die Anforderungen an eine ausreichend hohe Scherfestigkeit (Mikroscherweg) insbesondere unter Temperaturbelastung (SAFT-Test, Heizzylindertest). Selbst bei 160 °C ist für alle erfindungsgemäßen Beispiele noch eine zufriedenstellende Scherfestigkeit festzustellen, alle zeigen noch befriedigende Werte von über 40 s. Erfindungsgemäß äußerst bevorzugt sind Klebemassen, die auch für diese Temperatur gute Werte zeigen, da diese auch bei hohen Temperaturen hervorragend eingesetzt werden können; dies sind insbesondere die erfindungsgemäßen Beispiele 4, 5 und 6, die mit über 90 s im Heizzylindertest bei 160 °N noch einmal deutlich höhere Werte aufweisen als die übrigen erfindungsgemäßen Beispiele.

Die Vergleichsbeispiele 1-4 können zwar einzelne Kriterien erfüllen, jedoch zeigen sie jeweils auch Nachteile.

## Patentansprüche

1. Klebeband für den fliegenden Rollenwechsel von Flachbahnmaterialien, insbesondere Flachbahnmaterialien mit unpolaren Oberflächen, das Klebeband zumindest umfassend
eine obere Selbstklebemassenschicht, einen als flächige Sollbruchstelle angepassten inneren Klebebandbereich und eine untere Selbstklebemasse an der unteren Seite des inneren Klebebandbereichs,
wobei als Selbstklebemasse für zumindest die obere Selbstklebemassenschicht eine Naturkautschukklebemasse eingesetzt wird,
**dadurch gekennzeichnet, dass**
die Naturkautschukmasse die folgenden Komponenten umfasst:
a) 40 bis 60 Gew.-% Naturkautschuk
b) 10 bis 50 Gew.-% eines oder mehrerer Festharze
c) 8 bis 20 Gew.-% Weichmacher
d) optional bis zu 10 Gew.-% zusätzlicher Bestandteile
und das Verhältnis an Naturkautschuken - Komponente (a) - zur Summe aus Festharzen - Komponente (b) - und Weichmachern - Komponente (c) - mindestens 0,75 und höchstens 1,60 beträgt, bezogen auf die jeweiligen Gewichtsanteile in der Selbstklebemasse.

2. Klebeband nach Anspruch 1, **dadurch gekennzeichnet, dass**
der Anteil der Festharze - Komponente (b) - in der Selbstklebemasse 20 bis 50 Gew.-%, bevorzugt 30 bis 50 Gew.-%, beträgt.

3. Klebeband nach Anspruch 1 oder 2, **dadurch gekennzeichnet, dass**
der Anteil der Weichmacher - Komponente (c) - in der Selbstklebemasse 8 bis 15 Gew.-% beträgt.

4. Klebeband nach einem der Ansprüche 2 bis 3, **dadurch gekennzeichnet, dass**
der Anteil zusätzlicher Bestandteile - Komponente (d) - in der Selbstklebemasse bis zu 3 Gew.-% beträgt.

5. Klebeband nach einem der Ansprüche 2 bis 4, **dadurch gekennzeichnet, dass**
die Selbstklebemasse ausschließlich aus den Komponenten (a) bis (d) zusammengesetzt ist.

6. Klebeband nach einem der Ansprüche 2 bis 5, **dadurch gekennzeichnet, dass**
sich die Erweichungstemperaturen der eingesetzten Festharze - Komponente (b) - und die eingesetzten Weichmacher - Komponente (c) - um mindestens 20 °C, bevorzugt um mindestens 40 °C, unterscheiden.

7. Klebeband nach einem der vorangehenden Ansprüche, **dadurch gekennzeichnet, dass** auch für die untere Selbstklebemassenschicht eine Naturkautschukklebemasse eingesetzt wird.

8. Klebeband nach Anspruch 7, **dadurch gekennzeichnet, dass** die Naturkautschukklebemasse eine solche wie in einem der Ansprüche 2 bis 6 beschriebene Klebemasse ist.

9. Klebeband nach einem der Ansprüche 7 oder 8, **dadurch gekennzeichnet, dass** die untere Selbstklebemasse in ihrer Zusammensetzung zur oberen Selbstklebemasse identisch ist.

10. Klebeband nach einem der vorangehenden Ansprüche,
**dadurch gekennzeichnet, dass** die flächige Sollbruchstelle dadurch realisiert wird, dass der innere Klebebandbereich gebildet wird aus oder umfasst:
eine vollflächige oder in Teilflächen flächig spaltbare Papierlage, vollflächig oder in Teilflächen lösbar zusammenkaschierte Schichten.

11. Verwendung eines Klebebandes nach einem der vorangehenden Ansprüche zur Verklebung von Flachbahnmaterialien im Prozess des fliegenden Rollenwechsels.

12. Verfahren für den fliegenden Rollenwechsel von auf Rollen aufgewickelten Flachbahnmaterial insbesondere mit unpolaren Oberflächen,
wobei zunächst zur Vorbereitung der die oberste Wicklung bildende Flachbahnabschnitt einer Rolle einer neuen Flachbahn mit Klebeband, das eine obere Selbstklebemassenschicht, einen als flächige Sollbruchstelle angepassten inneren Klebebandbereich und eine untere Selbstklebemasse an der unteren Seite des inneren Klebebandbereichs aufweist, an dem die darunterliegende Wicklung bildenden Flachbahnabschnitt fixiert wird, und zwar derart, dass ein Flächenbereich der vorderseitigen, ersten Klebmassenschicht offenliegt, woraufhin die so ausgerüstete neue Rolle neben eine fast gänzlich abgespulte zu ersetzende alte Rolle platziert und auf die im Wesentlichen gleiche Umfangsgeschwindigkeit wie diese beschleunigt wird, dann die neue Rolle gegen die von der alten Rolle ablaufende alte Bahn gedrückt wird, wobei der offenliegende Flächenbereich der vorderseitigen Klebmassenschicht des Klebebandes mit der alten Bahn bei im Wesentlichen gleichen Geschwindigkeiten der Bahnen verklebt wird, und wobei zugleich mit oder unmittelbar nach mit der Verklebung zumindest in den Sollbruchflächen des Klebebandes eine flächige Aufspaltung bzw. Schichtentrennung stattfindet, so dass die auf den Klebebandresten jeweils verbleibenden Reste des Materials die Klebebandschichtern abdecken, so dass nach der Aufspaltung bzw. Trennung keine klebenden Bereiche offenliegen,
**dadurch gekennzeichnet, dass**
das Klebeband ein solches nach einem der Ansprüche 1 bis 10 ist.

## Claims

1. Adhesive tape for flying splices of flat web materials,
in particular flat web materials with nonpolar surfaces, said adhesive tape at least comprising
an upper self-adhesive compound layer, an inner adhesive tape area adapted as a flat predetermined breaking point, and a lower self-adhesive compound on the underside of the inner adhesive tape area,
wherein a natural rubber adhesive compound is used as the self-adhesive compound for at least the upper self-adhesive compound layer
**characterized in that**
the natural rubber compound comprises the following components:
a) 40 to 60 wt% of natural rubber
b) 10 to 50 wt% of one or a plurality of solid resins
c) 8 to 20 wt% of a plasticizer, and
d) optionally up to 10 wt% of additional components and the ratio of natural rubbers - component (a) - to the total solid resins - component (b) - and plasticizers - component (c) - is at least 0.75 and at most 1.60 relative to the respective proportional weights in the self-adhesive compound.

2. Adhesive tape according to Claim 1, **characterized in that** the content of the solid resins - component (b) - in the self-adhesive compound is 20 to 50 wt%, and preferably 30 to 50 wt%.

3. Adhesive tape according to Claim 1 or 2, **characterized in**
**that**
the content of the plasticizers - component (c) - in the self-adhesive compound is 8 to 15 wt%.

4. Adhesive tape according to one of Claims 2 to 3,
**characterized in that**
the content of the additional components - component (d) - in the self-adhesive compound is up to 3 wt%.

5. Adhesive tape according to one of Claims 2 to 4,
**characterized in that**
the self-adhesive compound is composed exclusively of components (a) to (d).

6. Adhesive tape according to one of Claims 2 to 5,
**characterized in that**
the softening temperatures of the solid resins used - component (b) - and the plasticizers used - component (c) - differ by at least 20°C, and preferably by at least 40°C.

7. Adhesive tape according to one of the preceding claims, **characterized in that** a natural rubber adhesive compound is also used for the lower self-adhesive compound layer.

8. Adhesive tape according to Claim 7, **characterized in that** the natural rubber adhesive compound is an adhesive compound such as that described in one of Claims 2 to 8.

9. Adhesive tape according to one of Claims 7 or 8, **characterized in that** the lower self-adhesive compound is identical in composition to the upper self-adhesive compound.

10. Adhesive tape according to one of the preceding claims, **characterized in that** the flat predetermined breaking point is achieved **in that** the inner adhesive tape area is formed by or comprises:
a paper layer that is splittable over its entire surface or parts of its surface, or layers laminated together that are detachable over their entire surface or parts of their surface.

11. Use of an adhesive tape according to one of the preceding claims for bonding of flat web materials in the flying splicing process.

12. Method for flying splices of flat web material wound onto rolls, in particular with nonpolar surfaces, wherein the upper coil-forming flat web section of a roll of a new flat web is first prepared with adhesive tape comprising an upper self-adhesive compound layer, an inner adhesive tape area adapted as a flat predetermined breaking point, and a lower self-adhesive compound on the underside of the inner adhesive tape area, to which the underlying coil-forming flat web section is attached, specifically in such a way that a surface area of the front side first adhesive compound layer is exposed, after which the new roll thus equipped is placed next to an almost fully depleted old roll to be replaced and is accelerated to essentially the same circumferential speed as said old roll, and the new roll is pressed against the old web unwinding from the old roll, wherein the exposed surface area of the front side adhesive compound layer of the adhesive tape is bonded to the old web at essentially the same web speeds, and wherein, simultaneously with or immediately after bonding, flat splitting or layer separation takes place at least in the predetermined breaking areas of the adhesive tape, so that the respective material residues remaining on the adhesive tape remnants cover the adhesive tape layers, with the result that no adhesive areas remain exposed after the splitting or separation, **characterized in that**
the adhesive tape is a tape according to one of Claims 1 to 10.

## Revendications

1. Bande adhésive pour le changement de rouleau volant de matériau en bande plate, en particulier de matériau en bande plate avec des surfaces non polaires, la bande adhésive comprenant au moins
une couche supérieure de masse autoadhésive, une région intérieure de bande adhésive adaptée en tant que point de rupture théorique plat et une masse autoadhésive inférieure sur le côté inférieur de la région intérieure de bande adhésive,
dans laquelle on utilise comme masse autoadhésive pour au moins la couche supérieure de masse autoadhésive une masse adhésive en caoutchouc naturel,
**caractérisée en ce que** la masse adhésive en caoutchouc naturel comprend les composants suivants:
a) 40 à 60 % en poids de caoutchouc naturel,
b) 10 à 50 % en poids d'une ou de plusieurs résine (s) solide(s),
c) 8 à 20 % en poids de plastifiant,
d) en option jusque 10 % en poids de constituants additionnels,
et le rapport des caoutchoucs naturels - composant (a) - à la somme des résines solides - composant (b) - et des plastifiants - composant (c) - vaut au moins 0,75 et au plus 1,60, rapporté aux parts pondérales respectives dans la masse autoadhésive.

2. Bande adhésive selon la revendication 1, **caractérisée en ce que** la part des résines solides - composant (b) - dans la masse autoadhésive vaut 20 à 50 % en poids, de préférence 30 à 50 % en poids.

3. Bande adhésive selon la revendication 1 ou 2, **caractérisée en ce que** la part des plastifiants - composant (c) - dans la masse autoadhésive vaut 8 à 15 % en poids.

4. Bande adhésive selon l'une quelconque des revendications 2 à 3, **caractérisée en ce que** la part des constituants additionnels - composant (d) - dans la masse autoadhésive vaut jusque 3 % en poids.

5. Bande adhésive selon l'une quelconque des revendications 2 à 4, **caractérisée en ce que** la masse autoadhésive est composée exclusivement des composants (a) à (d).

6. Bande adhésive selon l'une quelconque des revendications 2 à 5, **caractérisée en ce que** les températures de ramollissement des résines solides utilisées - composant (b) - et des plastifiants utilisés - composant (c) - diffèrent d'au moins 20°C, de préférence d'au moins 40°C.

7. Bande adhésive selon l'une quelconque des revendications précédentes, **caractérisée en ce que** l'on utilise également une masse adhésive en caoutchouc naturel pour la couche inférieure de masse autoadhésive.

8. Bande adhésive selon la revendication 7, **caractérisée en ce que** la masse adhésive en caoutchouc naturel est une masse adhésive décrite dans l'une quelconque des revendications 2 à 6.

9. Bande adhésive selon l'une quelconque des revendications 7 ou 8, **caractérisée en ce que** la masse autoadhésive inférieure est identique, en termes de composition, à la masse autoadhésive supérieure.

10. Bande adhésive selon l'une quelconque des revendications précédentes, **caractérisée en ce que** le point de rupture théorique plat est réalisé par le fait que la région intérieure de bande adhésive est formée de ou comprend:
une couche de papier pelable à plat dans toute la surface ou dans des surfaces partielles, des couches contrecollées de façon séparable dans toute la surface ou dans des surfaces partielles.

11. Utilisation d'une bande adhésive selon l'une quelconque des revendications précédentes pour le collage de matériaux en bande plate dans le processus de changement de rouleau volant.

12. Procédé de changement de rouleau volant de matériau en bande plate enroulé sur des rouleaux, en particulier avec des surfaces non polaires,
dans lequel d'abord pour la préparation on fixe la partie de bande plate formant la spire supérieure d'un rouleau d'une nouvelle bande plate avec une bande adhésive, qui présente une couche supérieure de masse autoadhésive, une région intérieure de bande adhésive adaptée en tant que point de rupture théorique plat et une masse autoadhésive inférieure sur le côté inférieur de la région intérieure de bande adhésive, sur la partie de bande plate formant la spire sous-jacente, notamment de telle manière qu'une région de surface de la première couche de masse adhésive avant soit découverte, puis on place le nouveau rouleau ainsi équipé à côté d'un ancien rouleau à remplacer presque complètement déroulé et on l'accélère à la vitesse périphérique essentiellement égale à celui-ci, dans lequel on colle la région de surface découverte de la couche de masse adhésive avant de la bande adhésive avec l'ancienne bande à des vitesses essentiellement égales des bandes, et dans lequel il se produit en surface en même temps que ou immédiatement après le collage un pelage ou une séparation de couches au moins dans les faces de rupture théorique de la bande adhésive, de telle manière que les restes du matériau demeurant respectivement sur les restes de bande adhésive recouvrent les strates de bande adhésive, de telle manière qu'après le pelage ou la séparation aucune région collante ne reste découverte,
**caractérisé en ce que** la bande adhésive est une bande selon l'une quelconque des revendications 1 à 10.
